# EUROPEAN PATENT SPECIFICATION

(11) **EP 1 940 193 B1**
(45) Date of publication and mention of the grant of the patent: **17.10.2012**
(21) Application number: 07254994.2
(22) Date of filing: 20.12.2007
(51) Int. Cl.: H04W 28/16

(54) **Wireless base station control station, mobile communication system, and priority cell selection method used for the same**
Basistationssteuergerät, mobiles Kommunikationssystem und Prioritätszellen-Auswahlverfahren zur Anwendung darin
Station de contrôle de station de base sans fil, système de communication mobile et procédé de sélection de cellule prioritaire utilisé pour celle-ci

(30) Priority: 27.12.2006 JP 2006350803
(43) Date of publication of application: 02.07.2008
(73) Proprietor: NEC Corporation, Minato-ku Tokyo 108-8001 (JP)
(72) Inventor: Atsushi, Nakata, Minato-ku Tokyo 108-8001 (JP); Yoshio, Ueda, Minato-ku Tokyo 108-8001 (JP)
(74) Representative: MacDougall, Alan John Shaw

(56) References cited:
- EP-A- 1 467 528
- EP-A- 1 531 586
- EP-A- 1 689 131
- EP-A1- 1 672 941

## Description

### BACKGROUND OF THE INVENTION

### Field of the invention

The present invention relates to a wireless base station control station, a mobile communication system, and a priority cell selection method used for the same, and more particularly, to a cell selection method in an IMT (International Mobile Telecommunications) 2000 system.

### Description of the Related Art

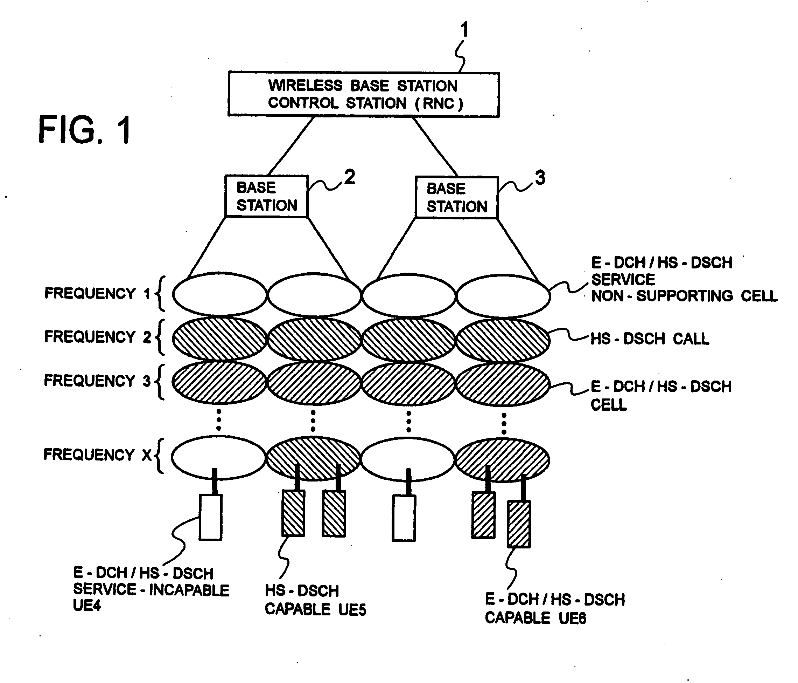

A related cell selection algorithm will be described with reference to FIG. 1.

In FIG. 1, in an environment in which there coexist an E-DCH (Enhanced Uplink DCH(Dedicated Channel))/HS-DSCH(High Speed Downlink Shared Channel) service non-supporting cell, an HS-DSCH cell, and an E-DCH/HS-DSCH cell that are controlled via the same antenna and use different frequencies, and in which an E-DCH/HS-DSCH Service-incapable User Equipment (UE) 4, an HS-DSCH capable UE5, and an E-DCH/HS-DSCH capable UE6 are present in the same area (see Patent Document 1 (Japanese Patent Laid-Open No. 2006-229384), for instance), a RNC (Radio Network Controller: wireless base station control station) 1 implements load control to select a target cell upon any one of the following triggers.

The triggers are:
1. When the RNC receives a first radio connection request (RRC (Radio Resource Control)) message;
2. When there is a change of channel type from a shared channel to a dedicated channel (CTS FACH (Forward Access Channel) to DCH) upon receipt of a report on traffic increase from a UE or detection of an increase in transfer buffer in the RNC during connection to a packet service on a shared channel;
3. When the RNC receives a report on quality degradation in the frequency band of the current cell from a UE and carries out a different frequency HO (Handover) to a cell of a different frequency which is controlled by the same antenna; and
4. When the RNC receives a service connection request (RAB (Radio Access Bearer) Assignment Request) message from a core network (CN) during an RRC Connection on a shared channel.

However, the related cell selection algorithm described above has a problem of being unable to preferentially select a cell which can provide a service implementable by a UE because a load control algorithm does not make cell selection that takes into consideration the capability of the UE.

The related cell selection algorithm also has a problem of being unable to preferentially select a cell which can provide a service implementable by a UE because the load control algorithm does not make cell selection that takes into consideration an E-DCH/HS-DSCH service non-supporting cell, an HS-DSCH cell, and an E-DCH/HS-DSCH cell.

The related cell selection algorithm further has a problem of being unable to preferentially select a cell which can provide a service implementable by a UE at the present point in time.

Because it does not make cell selection that takes into consideration an HS-DSCH block status flag which indicates whether it is possible to provide a new HSDPA service at that point in time in an HS-DSCH cell that can provide a high-speed downlink HSDPA (High-Speed Downlink Packet Access) service, and an E-DCH block status flag which indicates whether it is possible to provide a new HSUPA service in an E-DCH/HS-DSCH cell that can provide not only a high-speed downlink HSDPA service but a high-speed uplink HSUPA (High-Speed Uplink Packet Access) service.

In short, the related cell selection algorithm does not perform cell selection that considers the capability of a UE and/or cell types when a connection is to be made to a cell of a different frequency. As a result, resource is likely to be utilized with low efficiency.

For example, a UE which is incapable of implementing an E-DCH/HS-DSCH service implements a packet service which provides a low-speed service in an E-DCH/HS-DSCH cell, or an HS-DSCH capable UE implements a high-speed packet service only on downlink in an E-DCH/HS-DSCH cell.

EP1689131A1 describes a service admission control algorithm for High Speed Uplink Packet Access (HSUPA) in which a Serving Radio Network Controller (SRNC) determines if a service should be admitted or rejected on the E-DCH and, in the event of rejection, determines whether the service can be admitted on the DCH.

EP11467528A1 discloses a method of wireless communication supporting the transmission and reception of data on the downlink and/or uplink, such as HSDPA and HSUPA.

EP1531586A2 discloses a method of managing resources allocated for HSDPA in a mobile communication system.

EP1213941A2 discloses a method for supporting a hand-off decision of a mobile terminal to guarantee mobility between different mobile communication network systems.

EP0844798A2 discloses a method which assigns mobiles to cells of different sizes in a network in which GSM and DCS radio interfaces are available based on a priority allocated to each interface.

EP 1694011A1 discloses a system for enabling wireless resources to be effectively used in an environment where the HSDPA scheme and a voice call are mixed in the cell.

### SUMMARY

Therefore, an exemplary object of the invention is to provide a wireless base station control station, a mobile communication system, and a priority cell selection method used for the same that can solve the above-described problems and enable a UE to be settled in a cell that can provide a service implementable by the UE.

Aspects of the invention are recited in the independent claims.

### BRIEF DESCRIPTION OF THE DRAWINGS

FIG. 1 is a block diagram showing a configuration of a mobile communication system according to a first exemplary embodiment of the invention;
FIG. 2 is a block diagram showing an internal configuration of an RNC according to the first exemplary embodiment of the invention;
FIG. 3 shows the detailed contents of the cell information shown in FIG. 2;
FIG. 4 shows the detailed structure of the UE information shown in FIG. 2;
FIG. 5 shows the detailed structure of a first radio connection request (RRC Connection Request) processed by the UE information processing unit shown in FIG. 2; FIG. 6 shows the detailed structure of the internal data shown in FIG. 2
FIG. 7 is a block diagram showing the detailed configuration of the cell selection processing unit shown in FIG. 2;
FIG. 8 is a flowchart illustrating the operation of a UE Differentiation algorithm for cell selection upon receipt of an RRC Connection Request message in the first exemplary embodiment of the invention;
FIG. 9 is a flowchart illustrating the operation of the UE Differentiation algorithm for cell selection upon receipt of an RRC Connection Request message in the first exemplary embodiment of the invention;
FIG. 10 is a flowchart illustrating the operation of the UE Differentiation algorithm for cell selection upon receipt of an RRC Connection Request message in the first exemplary embodiment of the invention;
FIG. 11 is a flowchart illustrating the operation of a cell selection algorithm <A> for an E-DCH/HS-DSCH service-incapable UE in the first exemplary embodiment of the invention;
FIG. 12 is a flowchart illustrating the operation of a cell selection algorithm <B> for an HS-DSCH -capable UE in the first exemplary embodiment of the invention;
FIGS. 13A and 13B are flowcharts illustrating the operation of a cell selection algorithm <C> for an E-DCH/HS-DSCH capable UE in the first exemplary embodiment of the invention;
FIG. 14 is a flowchart illustrating the operation of a UE Differentiation cell selection algorithm <D> upon receipt of an RRC Connection Request in the first exemplary embodiment of the invention;
FIG. 15 is a block diagram showing the internal configuration of an RNC according to a second exemplary embodiment of the invention;
FIG. 16 shows the detailed structure of the UE information shown in FIG. 15;
FIG. 17 is a flowchart illustrating the operation of the UE Differentiation algorithm at the time of CTS CtoD in the second exemplary embodiment of the invention;
FIG. 18 is a flowchart illustrating the operation of a UE Differentiation cell selection algorithm <E> at the time of CTS CtoD in the second exemplary embodiment of the invention;
FIG. 19 is a block diagram showing the internal configuration of an RNC according to a third exemplary embodiment of the invention;
FIG. 20 shows the detailed structure of UE information shown in FIG. 19;
FIG. 21 shows the structure of a radio quality measurement report from a UE which is received by a UE radio quality measurement report processing unit shown in FIG. 19;
FIG. 22 shows the structure of internal data on service types shown in FIG. 19;
FIG. 23 is a flowchart illustrating the operation of the UE Differentiation algorithm executed when a report on quality degradation in the frequency band of the current cell is received from a UE and an inter-frequency HO to a cell of a different frequency which is controlled via the same antenna is carried out in the third exemplary embodiment of the invention;
FIG. 24 is a flowchart illustrating the operation of the UE Differentiation algorithm executed when a report on quality degradation in the frequency band of the current cell is received from a UE and an inter-frequency HO to a cell of a different frequency which is controlled via the same antenna is carried out in the third exemplary embodiment of the invention;
FIG. 25 is a block diagram showing the internal configuration of an RNC according to a fourth exemplary embodiment of the invention;
FIG. 26 shows the detailed structure of UE information shown in FIG. 25; and
FIG. 27 is a flowchart illustrating the operation of the UE Differentiation algorithm executed when a service connection request message is received from a core network (CN) during an RRC Connection on a shared channel in the fourth exemplary embodiment of the invention.

### EXEMPLARY EMBODIMENT

The mobile communication system according to the present invention is an IMT (International Mobile Telecommunications) 2000 system which is a third-generation mobile communication system.

In the system of the present invention, as terminals (User Equipment or UE), there coexist three kinds of UEs. The first UE is an HS-DSCH capable UE to which a high-speed downlink HSDPA (High Speed Downlink Packet Access) service is provided on an HS-DSCH (High Speed Downlink Shared Channel) at the time of implementing a packet service.

The second UE is an E-DCH/HS-DSCH capable UE to which not only a high-speed downlink HSDPA service but a high-speed uplink HSUPA (High Speed Uplink Packet Access) service is provided on an E-DCH (Enhanced DCH)/HS-DSCH.

And the third UE is an HS non-supporting UE (E-DCH/HS-DSCH service-incapable UE) to which only low-speed services are provided both on uplink and downlink and does not support HSDPA or HSUPA.

In the mobile communication system according to the invention, in a transition period in which HSDPA and HSUPA services are being started to be provided, there also coexist an HS-DSCH cell which can provide a high-speed downlink HSDPA service, an E-DCH/HS-DSCH cell which can provide not only a high-speed downlink HSDPA service but a high-speed uplink HSUPA service, and an E-DCH/HS-DSCH service non-supporting cell which can provide only low-speed services both on uplink and downlink and does not support HSDPA or HSUPA.

In the mobile communication system of the invention, an RNC (Radio Network Controller or a wireless base station control station) uses a cell selection algorithm which preferentially selects an E-DCH/HS-DSCH service non-supporting cell for an E-DCH/HS-DSCH service-incapable UE, preferentially selects an HS-DSCH cell for an HS-DSCH capable UE, and preferentially selects an E-DCH/HS-DSCH cell for an E-DCH/HS-DSCH capable UE.

The mobile communication system according to the invention also uses a cell selection algorithm that evaluates two flags and a priority as follows.

The first flag is an HS-DSCH block status flag which indicates whether it is possible to provide a new HSDPA service at the present point in time in an HS-DSCH cell which can provide a high-speed downlink HSDPA service.

The second flag is an E-DCH block status flag which indicates whether it is possible to provide a new HSUPA service in an E-DCH/HS-DSCH cell which can provide not only a high-speed downlink HSDPA service but a high-speed uplink HSUPA (High-Speed Uplink Packet Access) service.

And a priority is the priority in hierarchization (Hierarchical Cell Structure Priority: HCS_PRIO) of all cells.

Furthermore, in the mobile communication system according to the invention, the RNC maintains an establishment cause which is intended for a high-speed service in RNC internal data in order to determine whether a UE is an E-DCH/HS-DSCH service-incapable UE, an HS-DSCH capable UE, or an E-DCH/HS-DSCH capable UE.

And the RNC uses a cell selection algorithm which evaluates the capability of the UE, a version supported by the UE, the type of a service to be started by the UE, an establishment cause, and/or presence/absence of protocol errors, which are indicated in the first radio connection request (RRC (Radio Resource Control) Connection Request) message from the UE.

Furthermore, in the mobile communication system according to the invention, the RNC manages load information of all the cells it controls, and uses a cell selection algorithm that compares an increase in load that will result from addition of a UE with a predetermined threshold value in order to determine whether the UE can be settled in a cell selected for the UE by the cell selection algorithm, and if the cell load exceeds the threshold value, selects another candidate cell.

In the mobile communication system according to the invention, in the IMT 2000 system architecture shown in FIG. 1, the RNC allows coexistence of an E-DCH/HS-DSCH service non-supporting cell, an HS-DSCH cell, and an E-DCH/HS-DSCH cell which are controlled via the same antenna and use different frequencies, and can allocate a channel appropriate for the capability of an E-DCH/HS-DSCH service-incapable UE, an HS-DSCH capable UE, and an E-DCH/HS-DSCH capable UE which are present in the same area so as to provide packet services with good utilization efficiency of frequency.

As outlined above, the cell selection algorithm of the present invention evaluates cell type information, such as an E-DCH/HS-DSCH service non-supporting cell, an E-DCH/HS-DSCH cell, and an HSDPA/HS-DSCH cell, which are controlled by the RNC via the same antennas of the base stations and use different frequencies;
an HS-DSCH block status flag which indicates whether it is possible to provide a new HSDPA service can be provided at the present point in time in an HS-DSCH cell which can provide a high-speed downlink HSDPA service;
an E-DCH block status flag which indicates whether it is possible to provide a new HSUPA service in an E-DCH/HS-DSCH cell which can provide not only a high-speed downlink HSDPA service but a high-speed uplink HSUPA service;
cell information, such as priority in hierarchization (HCS_PRIO) of each cell; load information for all cells that are controlled by the RNC; internal data on a cause of establishment which is intended for a high-speed service as an RNC;
and UE information, such as the capability of a UE and/or a version supported by the UE the type of a service to be started by the UE and/or the establishment cause, presence/absence of protocol errors, information on all frequency bands supported by the UE, which are indicated in the first radio connection request (RRC (Radio Resource Control) Connection Request) message from the UE.

Next, an exemplary embodiment of the invention will be described with reference to drawings.

### First Exemplary Embodiment

FIG. 1 is a block diagram showing the configuration of a mobile communication system according to a first exemplary embodiment of the invention.

In FIG. 1, the mobile communication system according to the first exemplary embodiment of the invention includes an RNC (Radio Network Controller: wireless base station control station) 1, base stations 2 and 3, a UE (User Equipment or mobile terminal) 4 which is incapable of implementing an E-DCH (Enhanced Uplink DCH (Dedicated Channel))/HS-DSCH (High Speed Downlink Shared Channel) service, an HS-DSCH capable UE 5, and an E-DCH/HS-DSCH capable UE 6.

The RNC 1 allows coexistence of an E-DCH/HS-DSCH service non-supporting cell, an HS-DSCH cell, and an E-DCH/HS-DSCH cell which are controlled via the same antenna and use different frequencies, and can allocate a channel appropriate for the capability of the E-DCH/HS-DSCH service-incapable UE 4, the HS-DSCH capable UE 5, and the E-DCH/HS-DSCH capable UE 6 which are present in the same area so as to provide packet services with good utilization efficiency of frequency.

As described above, in the mobile communication system according to the first exemplary embodiment of the invention, a cell selection algorithm evaluates cell type information, such as an E-DCH/HS-DSCH service non-supporting cell, an E-DCH/HS-DSCH cell, and an HSDPA/HS-DSCH cell, which are controlled by the RNC 1 via the same antennas of the base stations 2 and 3 and use different frequencies;
an HS-DSCH block status flag which indicates whether it is possible to provide a new HSDPA service can be provided at the present point in time in an HS-DSCH cell which can provide a high-speed downlink HSDPA (High-speed Downlink Packet Access) service;
an E-DCH block status flag which indicates whether it is possible to provide a new HSUPA service in an E-DCH/HS-DSCH cell which can provide not only a high-speed downlink HSDPA service but a high-speed uplink HSUPA (High-Speed Uplink Packet Access) service; cell information, such as priority in hierarchization (HCS_PRIO: Hierarchical Cell Structure Priority) of each cell;
load information for all cells that are controlled by the RNC 1;
internal data on an establishment cause which is intended for a high-speed service for the RNC 1;
and UE information, such as the capability of a UE and/or a version supported by the UE, the type of a service to be started by the UE, an establishment cause, presence/absence of protocol errors, information on all frequency bands supported by the UE, which are indicated in the first radio connection request (RRC (Radio Resource Control) Connection Request) message from the UE.

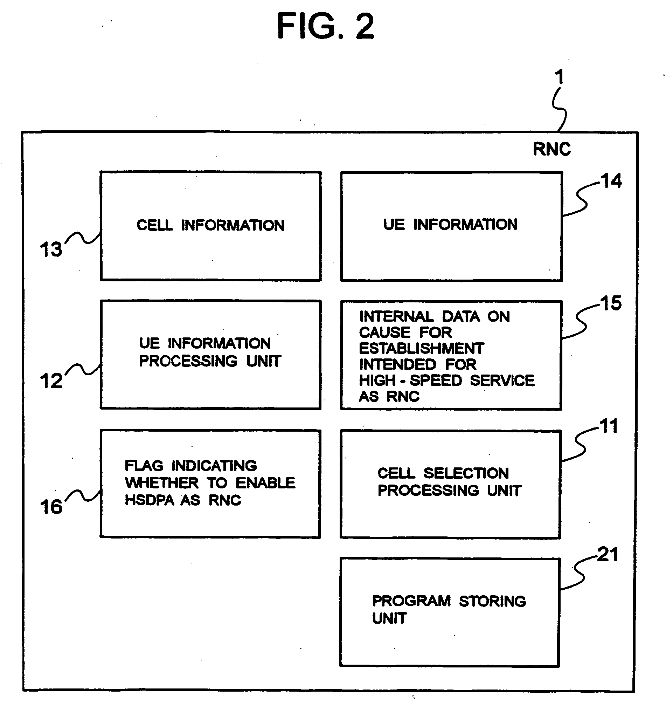

FIG. 2 is a block diagram showing the internal configuration of the RNC according to the first exemplary embodiment of the invention. The mobile communication system according to the first exemplary embodiment of the invention has a similar configuration to that of the mobile communication system described above and shown in FIG. 1, and FIG. 2 illustrates the internal configuration of the RNC 1 shown in FIG. 1.

In FIG. 2, the RNC 1 includes a cell selection processing unit 11 and a UE information processing unit 12, and maintains cell information 13, UE information 14, internal data 15 on an establishment cause which is intended for a high-speed service for the RNC 1 (hereinafter referred to as internal data), and a flag 16 which indicates whether to enable HSDPA as the RNC 1 (hereinafter a "flag").

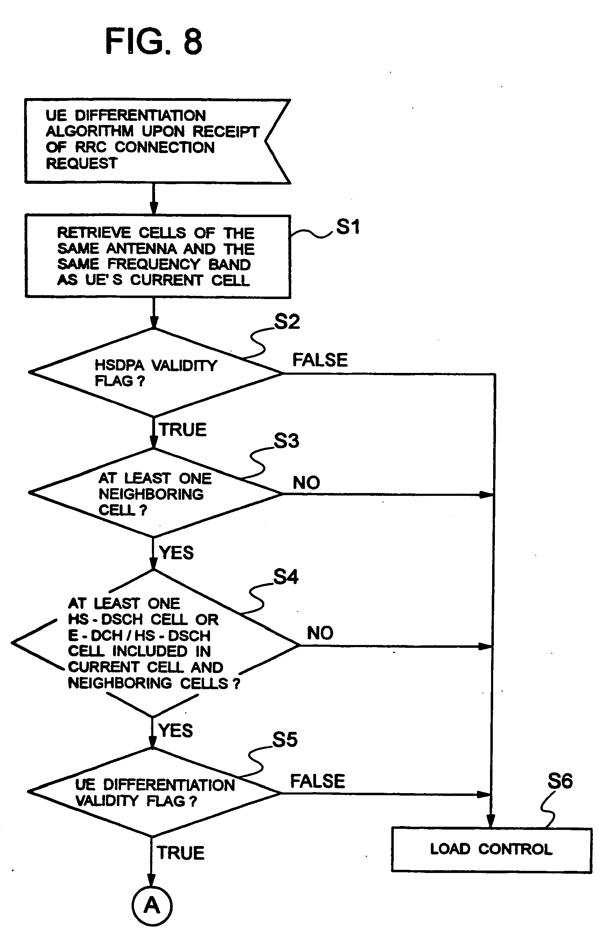

The RNC 1 further includes a program storing unit 21 in which a program for a priority cell selection method is stored. In the program storing unit 21 is stored a program for a priority cell selection method, which is illustrated in flowcharts in FIGS. 8 to 14 discussed later. The cell selection processing unit 11 reads the program for the priority cell selection method from the program storing unit 21 and executes priority cell selection processing.

Based on information obtained from the UE information processing unit 12, and information retrieved from the cell information 13, the UE information 14, and the internal data 15, the cell selection processing unit 11 preferentially selects an E-DCH/HS-DSCH service non-supporting cell for the E-DCH/HS-DSCH service-incapable UE 4, preferentially selects an HS-DSCH cell for the HS-DSCH capable UE 5, and preferentially selects an E-DCH/HS-DSCH cell for the E-DCH/HS-DSCH capable UE 6.

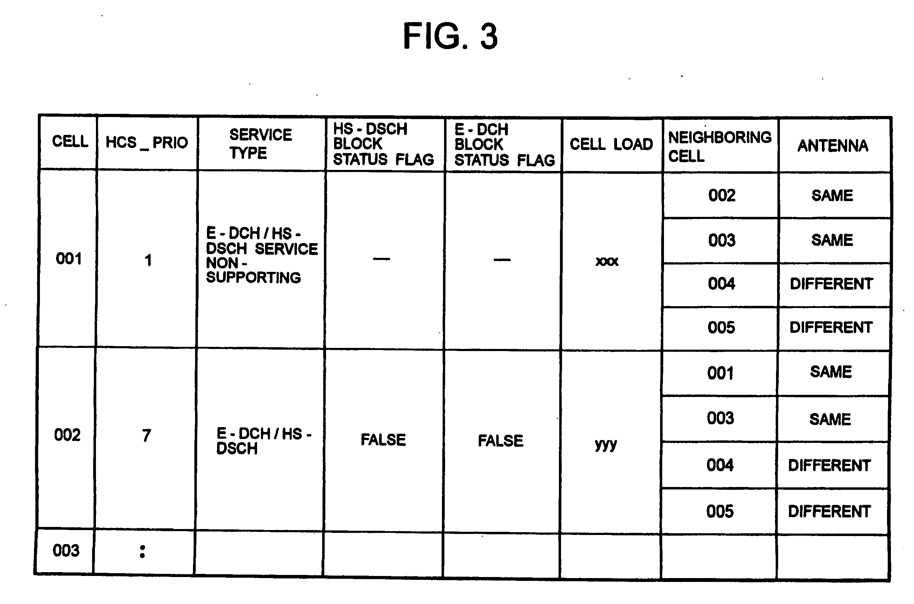

FIG. 3 shows the detailed structure of the cell information 13 shown in FIG. 2. In FIG. 3, for all cells, the RNC 1 maintains as the cell information 13 information on neighboring cells of different frequencies and information on whether those cells are controlled via the same antenna, HCS_PRIO of the cells, information on service types that can be provided in the cells, an HS-DSCH block flag which indicates whether it is possible to provide an HSDPA service at the present point in time, an E-DCH block status flag which indicates whether it is possible to provide an HSUPA service, and cell load information.

The HCS_PRIO is a value included as system information which is transmitted from a corresponding base station as announcement information. Since a UE selects an available cell on its own initiative in descending order of HCS_PRIO and transmits a radio connection request to the RNC 1, the RNC 1 sets the HCS_PRIO of an E-DCH/HS-DSCH service non-supporting cell to a large value and that of an HS-DSCH cell or an E-DCH/HS-DSCH cell to a low value at the time of cell configuration.

As types of service that can be provided, there are an E-DCH/HS-DSCH service non-supporting cell in which only low-rate services can be provided, an HS-DSCH cell in which an HSDPA service can be provided on downlink, and an E-DCH/HS-DSCH cell in which HSDPA/HSUPA services can be provided on uplink and downlink, respectively.

For the HS-DSCH block status flag, a resource management unit (not shown) in the RNC 1 determines TRUE or FALSE in accordance with resource available for HSDPA and/or the number of users who use an HSDPA service on downlink.

When the HS-DSCH block status flag of an HS-DSCH cell is TRUE, an HSDPA service cannot be provided and only a low-rate service can be established with a UE on downlink in the HS-DSCH cell.

When the HS-DSCH block status flag of an HS-DSCH cell is FALSE, an HSDPA service can be provided in the HS-DSCH cell.

For the E-DCH block status flag, the resource management unit in the RNC 1 determines TRUE or FALSE in accordance with resource available for HSUPA and/or the number of users who use an HSUPA service on uplink.

When the E-DCH block status flag of an E-DCH/HS-DSCH cell is TRUE, an HSUPA service cannot be provided and only a low-rate service can be established with a UE on uplink in the E-DCH/HS-DSCH cell. When the E-DCH block status flag of an E-DCH/HS-DSCH cell is FALSE, an HSUPA service can be provided in the E-DCH/HS-DSCH cell.

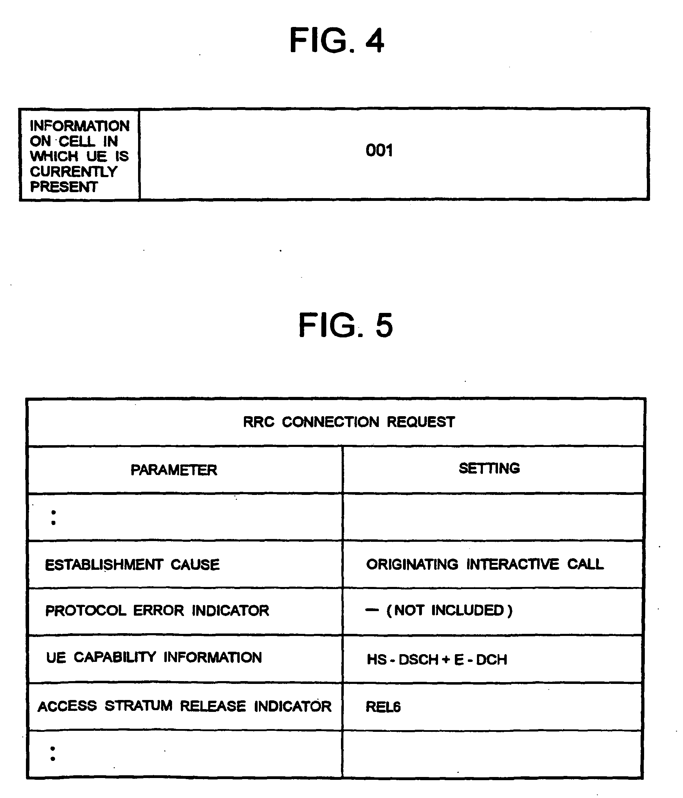

FIG. 4 shows the detailed structure of the UE information 14 shown in FIG. 2. In FIG. 4, the RNC 1 maintains information on a cell in which a UE is currently present as the UE information 14. Information on a cell in which a UE is currently present refers to a cell which contains a shared channel that was used for transmission of an RRC Connection Request message.

FIG. 5 shows the detailed structure of a first radio connection request (RRC Connection Request) message which is processed by the UE information processing unit 12 shown in FIG. 2.

In FIG. 5, the RRC Connection Request message contains an establishment request (Establishment Cause), presence/absence of protocol errors (Protocol Error Indicator), the capability of a UE (UE Capability Information), the version of the UE (Access Stratum Release Indicator).

For the Establishment Cause, an establishment cause which is defined by 3GPP (3rd Generation Partnership Project) TS25.331 is set, such as an originating conversational call or a terminating interactive call.

The Protocol Error Indicator can be set to TRUE or FALSE. When this parameter is not set, it means that no protocol error has occurred.

The UE Capability Information can be HS-DSCH+E-DCH or HS-DSCH. When this parameter is not set, the UE is regarded as the E/DCH/HS-DSCH service-incapable UE 4.

The Access Stratum Release Indicator can be REL (Release)-4, REL-5, REL-6, and so on. When this parameter is not set, it means R (Release) 99. In general, an HSDPA service can be supported by a UE with the Access Stratum Release Indicator of "REL-5" and onward, and an HSUPA service by a UE with the Access Stratum Release Indicator of "REL-6" and onward.

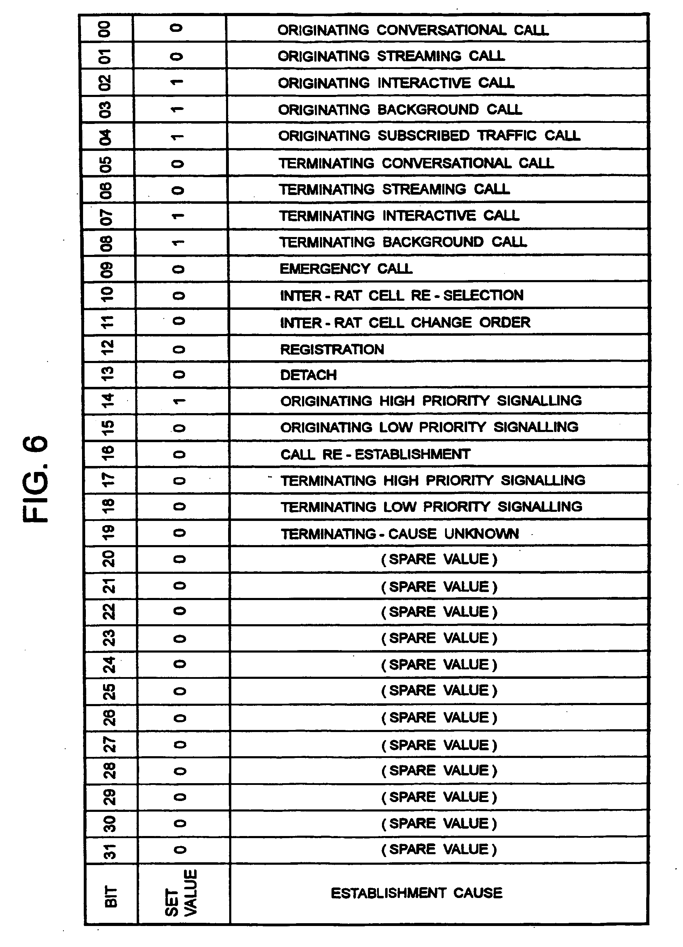

FIG. 6 shows the detailed structure of the internal data 15 shown in FIG. 2. In FIG. 6, in the internal data 15, TRUE or FALSE ("1" or "0") can be set by an operator for each Establishment Cause defined by 3GPP TS25.331.

In the example shown in FIG. 6, the Establishment Cause for Originating High Priority Signalling, Terminating Background Call, Terminating Interactive Call, Originating Subscribed Traffic Call, Originating Background Call, and Originating Interactive Call is set to TRUE ("1") as the reason for an establishment which is intended for an HSDPA or HSDPA/HSUPA service.

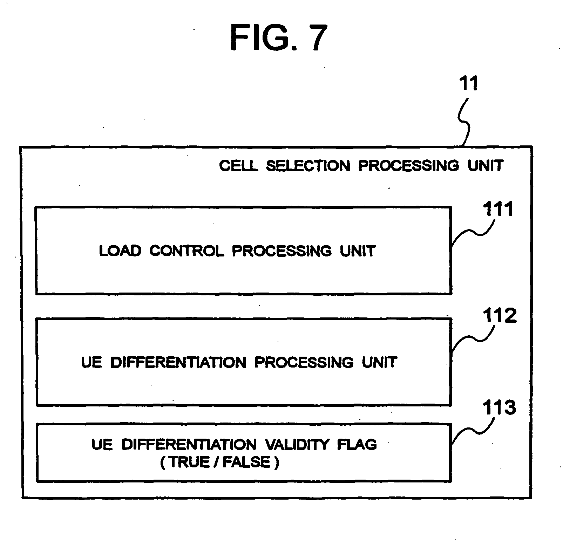

FIG. 7 is a block diagram showing the detailed configuration of the cell selection processing unit 11 shown in FIG. 2. In FIG. 7, the cell selection processing unit 11 includes a Load Control unit 111 which selects a cell for a UE based only on cell load information, and a UE Differentiation processing unit 112 which considers differentiation of a UE for which provision of an HSUPA service or an HSDPA service is taken into account, and maintains as internal data a flag 113 which indicates whether to validate a UE differentiation algorithm.

The configuration of the first exemplary embodiment of the invention has been described in detail above.

Management of the information on neighboring cells of different frequencies, and maintenance of information on whether the antenna is the same, usage of HCS_PRIO, cell load information, information on service types that can be provided by cells in the internal data 15 of the RNC 1, which are shown in FIG. 3, are themselves well-known to those skilled in the art, and although they do not directly pertain to the present invention, the present invention uses these pieces of information.

Likewise, the maintenance itself of information on a cell in which a UE is currently present, which is shown in FIG. 4, in the internal data 15 of the RNC 1 is well-known to those skilled in the art, and although it does not directly pertain to the present invention, the present invention uses these pieces of information.

Furthermore, the entire contents of the first radio connection request (RRC Connection Request) message of FIG. 5 are well-known to those skilled in the art, and although they do not directly pertain to the present invention, the present invention uses these pieces of information.

In addition, since the Load Control algorithm for selecting a cell for a UE based only on cell load information which is illustrated in FIG. 7 is well-known to those skilled in the art and does not directly pertain to the present invention, detailed description of the same is omitted.

FIGS. 8 through 10 are flowcharts illustrating the operation of the UE Differentiation algorithm for cell selection upon receipt of an RRC Connection Request message in the first exemplary embodiment of the invention. Referring to FIGS. 8 through 10, the operation of the UE Differentiation algorithm for cell selection upon receipt of the RRC Connection Request message of FIG. 5 will be described.

When the RNC 1 has received an RRC Connection Request message, it first retrieves a cell in which the UE is currently present and cells that are controlled via the same antenna and uses the same frequency band as that cell from FIGS. 3 and 4, and starts the UE Differentiation algorithm (step S1 in FIG. 8).

The RNC 1 checks the flag which indicates whether to enable HSDPA (step S2 in FIG. 8) . If the flag is invalid or FALSE, the RNC 1 selects a cell according to the Load Control algorithm shown in FIG. 7 (step S6 in FIG. 8).

If the flag is valid or TRUE, the RNC 1 checks whether there is at least one neighboring cell of a different frequency which is controlled via the same antenna as the cell in which the UE is currently present (step S3 in FIG. 8). If there is no such cell, the RNC 1 selects the cell in which the UE is currently present according to the Load Control algorithm shown in FIG. 7 (step S6 in FIG. 8).

If there is at least one neighboring cell of a different frequency, the RNC 1 checks whether at least one HS-DSCH cell or E-DCH/HS-DSCH cell is included in the cell in which the UE is currently present and the neighboring cell of a different frequency controlled via the same antenna (step S4 in FIG. 8).

If neither is included, the RNC 1 selects a cell according to the Load Control algorithm shown in FIG. 7 (step S6 in FIG. 8).

If there is an HS-DSCH cell or an E-DCH/HS-DSCH cell, the RNC 1 checks the validity flag of the UE Differentiation algorithm (step S5 in FIG. 8). If the flag is invalid or FALSE, the RNC 1 selects a cell according to the Load Control algorithm shown in FIG. 7 (step S6 in FIG. 8).

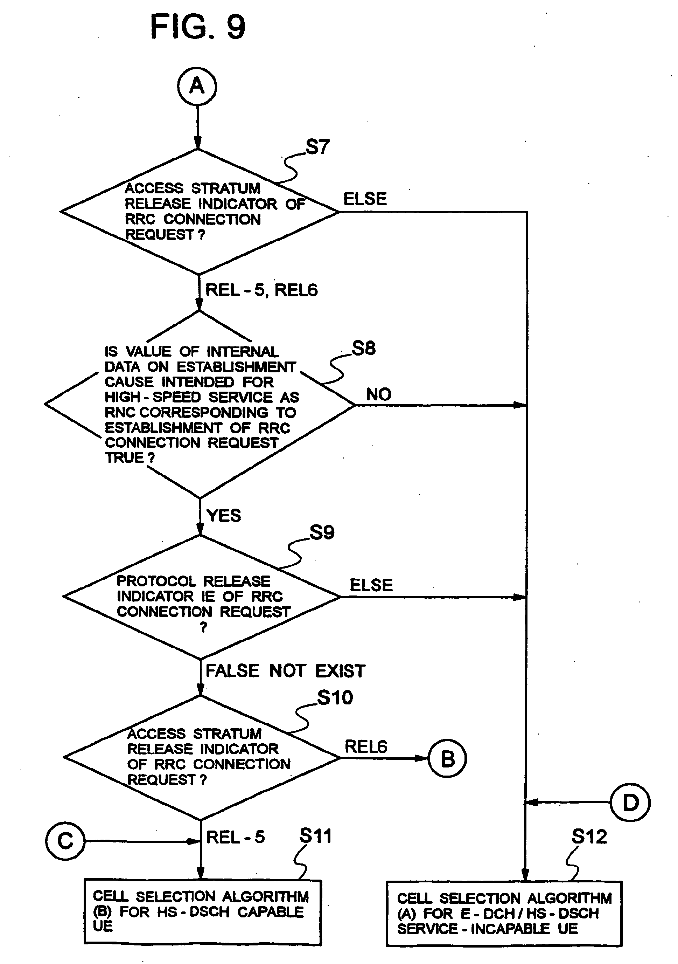

If the flag is valid or TRUE, the RNC 1 checks the Access Stratum Release Indicator shown in FIG. 5 (step S7 in FIG. 9). If the indicator shows other than REL-5 or REL-6 (i.e., ELSE), the RNC 1 executes a cell selection algorithm <A> for the E-DCH/HS-DSCH service-incapable UE 4 (step S12 in FIG. 9).

In a case of REL-5 or REL-6, the RNC 1 compares the Establishment Cause of FIG. 5 with the internal data 15 of FIG. 6 (step S8 in FIG. 9). If the value of the internal data 15 which corresponds to the Establishment Cause of FIG. 5 is FALSE ("0"), the RNC 1 executes the cell selection algorithm <A> for the E-DCH/HS-DSCH service-incapable UE 4 (step S12 in FIG. 9).

If the value of the internal data 15 corresponding to the Establishment Cause of FIG. 5 is TRUE ("1"), the RNC 1 checks the Protocol Error Indicator of FIG. 5 (step S10 in FIG. 9).

If the indicator is set to TRUE, the RNC 1 regards the UE to be a UE that cannot establish an RRC Connection with any cell other than the current cell, and executes the cell selection algorithm <A> for the E-DCH/HS-DSCH service-incapable UE 4 (step S12 in FIG. 9).

If the indicator is set to FALSE Not Exist, the RNC 1 again checks the Access Stratum Release Indicator of FIG. 5 (step S10 in FIG. 9).

If the Access Stratum Release Indicator is REL-5, the RNC 1 executes a cell selection algorithm <B> for the HS-DSCH capable UE 5 (step S11 in FIG. 9).

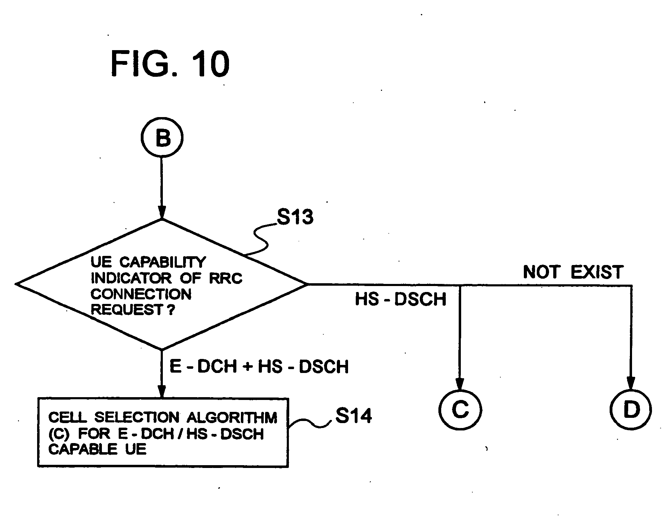

If the Indicator shows REL-6, the RNC 1 checks the UE Capability Information of FIG. 5 (step S13 in FIG. 10). If the UE capability is HS-DSCH+E-DCH, the RNC 1 executes a cell selection algorithm <C> for the E-DCH/HS-DSCH capable UE 6 (step S14 in FIG. 10).

If the UE capability is HS-DSCH, the RNC 1 executes the cell selection algorithm <B> for the HS-DSCH capable UE 5 (step S11 in FIG. 9).

If the UE Capability Information is not set (Not Exist), the RNC 1 executes the cell selection algorithm <A> for the E-DCH/HS-DSCH service-incapable UE 4 (step S12 in FIG. 9).

Next, description will be given of cell lists for the cell selection algorithm <A> for the E-DCH/HS-DSCH service-incapable UE 4, the cell selection algorithm <B> for the HS-DSCH capable UE 5, and the cell selection algorithm <C> for the E-DCH/HS-DSCH capable UE 6.

The description will be given by using current cell information which was used by the UE for transmission of an RRC Connection Request, which is shown in FIG. 3, as well as cell information on a cell in which the UE is currently present and neighboring cells of different frequencies which are controlled via the same antenna and use the same frequency band as that cell, which are shown in FIG. 3.

In a cell list "E-DCH/HS-DSCH Service-incapable Inter Frequency Cell List" for the cell selection algorithm <A> for the E-DCH/HS-DSCH service-incapable UE 4, neighboring cells of different frequencies which are controlled via the same antenna as the cell in which the UE is currently present are sorted by the following three sort keys:
A first sort key is in the order of an E-DCH/HS-DSCH service non-supporting cell, an HS-DSCH cell, and an E-DCH/HS-DSCH cell. A second sort key is in descending order of HCS_PRIO (a larger value means higher priority).
A third sort key is in descending order of downlink frequency or DL UARFCN (UTRA Absolute Radio Frequency Channel Number) (i.e., a larger value means higher priority).

In a cell list "HS-DSCH Preferred Inter Frequency Cell List" for the cell selection algorithm <B> for the HS-DSCH capable UE 5, neighboring cells of different frequencies which are controlled via the same antenna as the cell in which the UE is currently present are sorted by the following three sort keys:
A first sort key is in the order of an HS-DSCH cell with the HS-DSCH block status flag being FALSE, an E-DCH/HS-DSCH cell with the HS-DSCH block status flag being FALSE, an HS-DSCH cell with the HS-DSCH block status flag being TRUE, an E-DCH/HS-DSCH cell with the HS-DSCH block status flag being TRUE, and an E-DCH/HS-DSCH service non-supporting cell.
A second sort key is in descending order of HCS_PRIO. A third sort key is in descending order of downlink frequency or DL UARFCN.

In a cell list "E-DCH/HS-DSCH Preferred Inter Frequency Cell List" for the cell selection algorithm <C> for the E-DCH/HS-DSCH capable UE 6, neighboring cells of different frequencies which are controlled via the same antenna as the cell in which the UE is currently present are sorted by the following three sort keys:
A first sort key is in the order of an E-DCH/HS-DSCH cell with both the HS-DSCH block status flag and E-DCH block status flag being FALSE, an E-DCH/HS-DSCH cell with the HS-DSCH block status flag being FALSE and the E-DCH block status flag being TRUE, an E-DCH/HS-DSCH cell with the HS-DSCH block status flag being TRUE, an HS-DSCH cell with the HS-DSCH block status flag being FALSE, an HS-DSCH cell with the HS-DSCH block status flag being TRUE, and an E-DCH/HS-DSCH service non-supporting cell.
A second sort key is in descending order of HCS_PRIO. A third sort key is in descending order of downlink frequency or DL UARFCN.

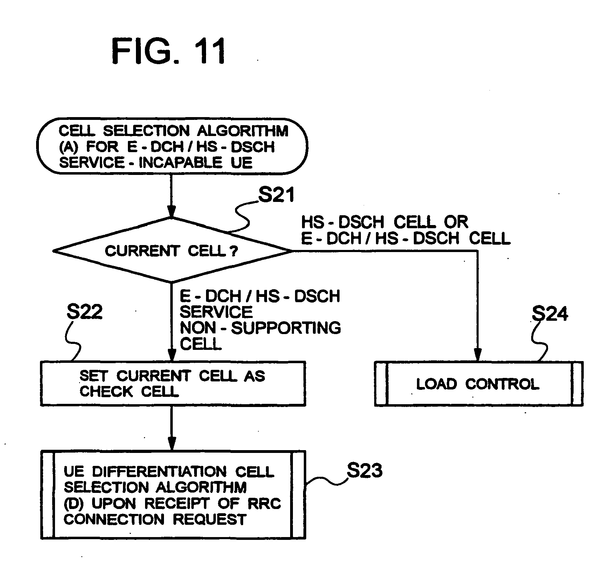

FIG. 11 is a flowchart illustrating the operation of the cell selection algorithm <A> for the E-DCH/HS-DSCH service-incapable UE 4 in the first exemplary embodiment of the invention.

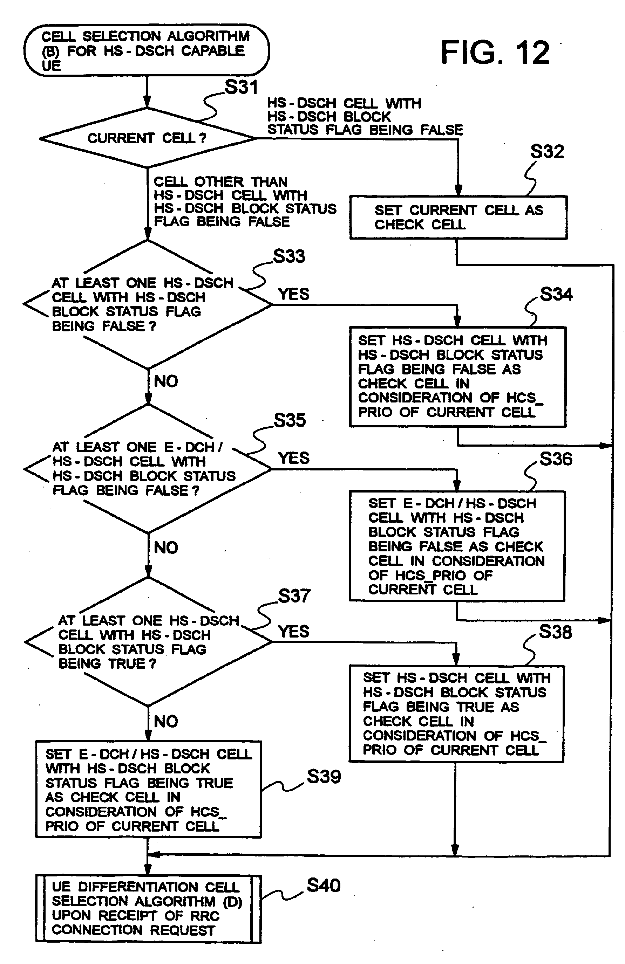

FIG. 12 is a flowchart illustrating the operation of the cell selection algorithm <B> for the HS-DSCH capable UE 5 in the first exemplary embodiment of the invention.

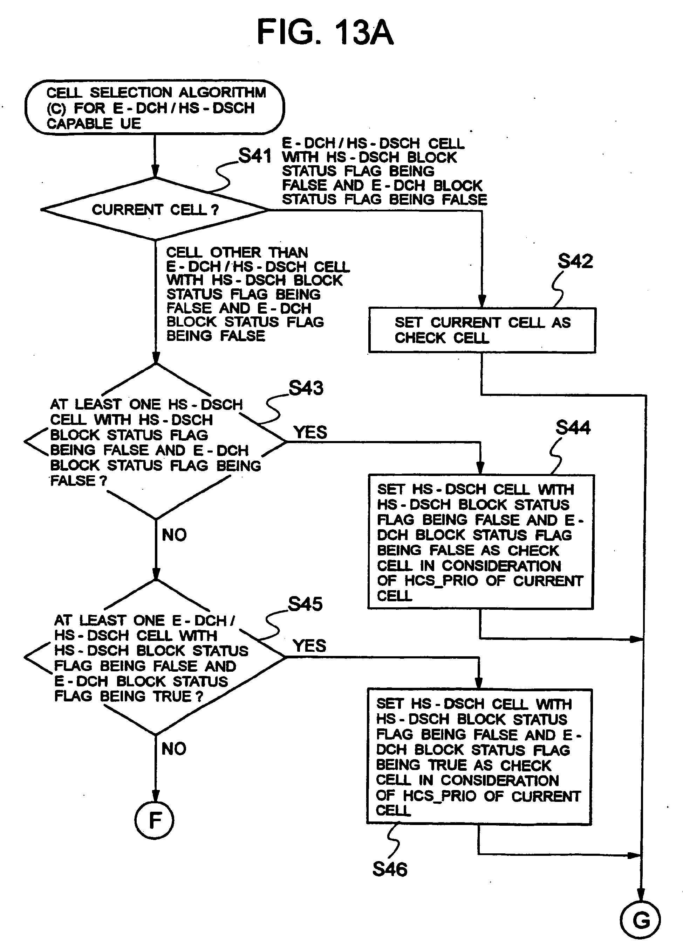

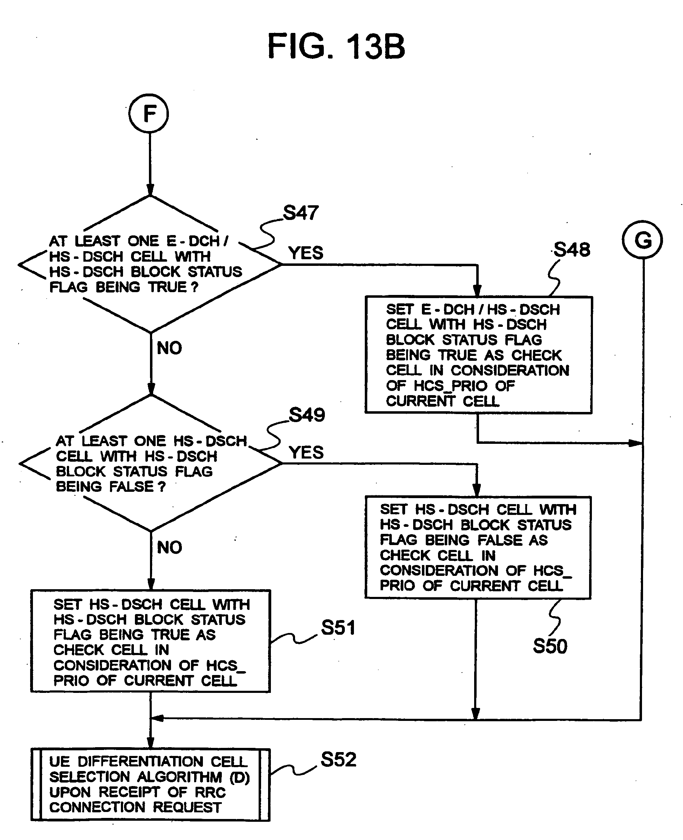

FIGS. 13A and 13B are flowcharts illustrating the operation of the cell selection algorithm <C> for the E-DCH/HS-DSCH capable UE 6 in the first exemplary embodiment of the invention.

With reference to FIGS. 11 to 13B, description will be given of the procedure for selecting a first cell for checking in the cell selection algorithm <A> for the E-DCH/HS-DSCH service-incapable UE 4, the cell selection algorithm <B> for the HS-DSCH capable UE 5, and the cell selection algorithm <C> for the E-DCH/HS-DSCH capable UE 6.

If the cell in which the UE is currently present is not an E-DCH/HS-DSCH service non-supporting cell according to the cell selection algorithm <A> for the E-DCH/HS-DSCH service-incapable UE 4 illustrated in FIG. 11 (step S21 in FIG. 11), the RNC 1 applies a load control algorithm to the E-DCH/HS-DSCH service-incapable UE 4 (step S24 in FIG. 11).

If the cell is an E-DCH/HS-DSCH service non-supporting cell, the RNC 1 sets the cell in which the UE is currently present as the first check cell (step S22 in FIG. 11), and executes a UE Differentiation cell selection algorithm <D> upon receipt of an RRC Connection Request (step S23 in FIG. 11).

If the cell in which the UE is currently present is an HS-DSCH cell with the HS-DSCH block status flag being FALSE according to the cell selection algorithm <B> for the HS-DSCH capable UE 5 illustrated in FIG. 12 (step S31 in FIG. 12), the RNC 1 sets the cell in which the UE is currently present as the first check cell (step S32 in FIG. 12).

And the RNC 1 executes the UE Differentiation cell selection algorithm <D> upon receipt of an RRC Connection Request (step S40 in FIG. 12).

When the cell is a cell other than an HS-DSCH cell with the HS-DSCH block status flag being FALSE (step S31 in FIG, 12), if there is at least one HS-DSCH cell with the HS-DSCH block status flag being FALSE in the HS-DSCH Preferred Inter Frequency Cell List (step S33 in FIG. 12), the RNC 1 selects an HS-DSCH cell whose HCS_PRIO is equal to that of the cell in which the UE is currently present or is smaller yet highest and has the HS-DSCH block status flag of FALSE as the first check cell.

When there is no such HS-DSCH cell, the RNC 1 selects as the first check cell an HS-DSCH cell which has the highest HCS_PRIO for the cell in which the UE is currently present and which has the HS-DSCH block status flag of FALSE (step S34 in FIG. 12).

Then, the RNC 1 executes the UE Differentiation cell selection algorithm <D> upon receipt of an RRC Connection Request (step S40 in FIG. 12).

When there is no HS-DSCH cell with the HS-DSCH block status flag being FALSE (step S33 in FIG. 12), if there is at least one E-DCH/HS-DSCH cell with the HS-DSCH block status flag being FALSE in the HS-DSCH Preferred Inter Frequency Cell List (step S35 in FIG. 12), the RNC 1 selects as the first check cell an E-DCH/HS-DSCH cell whose HCS_PRIO is equal to that of the cell in which the UE is currently present or is smaller yet highest and has the HS-DSCH block status flag of FALSE.

When there is no such E-DCH/HS-DSCH cell, the RNC 1 selects as the first check cell an E-DCH/HS-DSCH cell which has the highest HCS_PRIO for the cell in which the UE is currently present and has the HS-DSCH block status flag of FALSE (step S36 in FIG. 12).

Then, the RNC 1 executes the UE Differentiation cell selection algorithm <D> upon receipt of an RRC Connection Request (step S40 in FIG. 12).

When there is no E-DCH/HS-DSCH cell with the HS-DSCH block status flag being FALSE (step S35 in FIG. 12), if there is at least one HS-DSCH cell with the HS-DSCH block status flag being TRUE in the HS-DSCH Preferred Inter Frequency Cell List (step S37 in FIG. 12), the RNC 1 selects an HS-DSCH cell whose HCS_PRIO is equal to that of the cell in which the UE is currently present or smaller yet highest and which has the HS-DSCH block status flag of TRUE as the first check cell.

When there is no such HS-DSCH cell, the RNC 1 selects as the first check cell an HS-DSCH cell which has the highest HCS_PRIO for the cell in which the UE is currently present and has the HS-DSCH status flag of TRUE (step S38 in FIG. 12).

Then, the RNC 1 executes the UE Differentiation cell selection algorithm <D> upon receipt of an RRC Connection Request (step S40 in FIG. 12).

If there is no HS-DSCH cell with the HS-DSCH block status flag being TRUE (step S37 in FIG. 12), the RNC 1 selects an E-DCH/HS-DSCH cell whose HCS_PRIO is equal to that of the cell in which the UE is currently present or is smaller yet highest and has the HS-DSCH block status flag of TRUE as the first check cell in the HS-DSCH Preferred Inter Frequency Cell List.

When there is no such E-DCH/HS-DSCH cell, the RNC 1 selects as the first check cell an E-DCH/HS-DSCH cell which has the highest HCS_PRIO for the cell in which the UE is currently present and has the HS-DSCH block status flag being TRUE (step S39 in FIG. 12).

Then, the RNC 1 executes the UE Differentiation cell selection algorithm <D> upon receipt of an RRC Connection Request (step S40 in FIG. 12).

If the cell in which the UE is currently present is an E-DCH/HS-DSCH cell with the HS-DSCH block status flag being FALSE and the E-DCH block status flag being FALSE according to the cell selection algorithm <C> for the E-DCH/HS-DSCH capable UE 6 shown in FIG. 13 (step S41 in FIG. 13A), the RNC 1 sets the cell in which the UE is currently present as the first cell for checking (step S42 in FIG. 13B).

And the RNC 1 executes the UE Differentiation cell selection algorithm <D> upon receipt of an RRC Connection Request (step S52 in FIG. 13B).

When the current cell is a cell other than an E-DCH/HS-DSCH cell with the HS-DSCH block status flag being FALSE and the E-DCH block status flag being FALSE (step S41 in FIG. 13A), if there is at least one E-DCH/HS-DSCH cell with the HS-DSCH block status flag being FALSE and the E-DCH block status flag being FALSE in the E-DCH/HS-DSCH Preferred Inter Frequency Cell List (step S43 in FIG. 13A), the RNC 1 selects an E-DCH/HS-DSCH cell whose HCS_PRIO is equal to that of the cell in which the UE is currently present or is smaller yet highest and has the HS-DSCH block status flag of FALSE and the E-DCH block status flag of FALSE as the first check cell.

When there is no such E-DCH/HS-DSCH cell, the RNC 1 selects as the first check cell an E-DCH/HS-DSCH cell which has the highest HCS_PRIO for the cell in which the UE is currently present and has the HS-DSCH block status flag of FALSE and the E-DCH block status flag of FALSE (step S44 in FIG. 13A).

Then, the RNC 1 executes the UE Differentiation cell selection algorithm <D> upon receipt of an RRC Connection Request (step S52 in FIG. 13B).

When there is no E-DCH/HS-DSCH cell with the HS-DSCH block status flag being FALSE and the E-DCH block status flag being FALSE (step S43 in FIG. 13A), if there is at least one E-DCH/HS-DSCH cell with the HS-DSCH block status flag being FALSE and the E-DCH block status flag being TRUE in the E-DCH/HS-DSCH Preferred Inter Frequency Cell List (step S45 in FIG. 13), the RNC 1 selects an E-DCH/HS-DSCH cell whose HCS_PRIO is equal to that of the cell in which the UE is currently present or is smaller yet highest and which has the HS-DSCH block status flag of FALSE and the E-DCH block status flag of TRUE as the first check cell.

When there is no such E-DCH/HS-DSCH cell, the RNC 1 selects as the first check cell an E-DCH/HS-DSCH cell which has the highest HCS_PRIO for the cell in which the UE is currently present and has the HS-DSCH block status flag of FALSE and the E-DCH block status flag of TRUE (step S46 in FIG. 13).

Then, the RNC 1 executes the UE Differentiation cell selection algorithm <D> upon receipt of an RRC Connection Request (step S52 in FIG. 13B).

When there is no E-DCH/HS-DSCH cell with the HS-DSCH block status flag being FALSE and the E-DCH block status flag being TRUE (step S45 in FIG. 13A), if there is at least one E-DCH/HS-DSCH cell with the HS-DSCH block status flag being TRUE in the E-DCH/HS-DSCH Preferred Inter Frequency Cell List (step S47 in FIG. 13B), the RNC 1 selects an E-DCH/HS-DSCH cell whose HCS_PRIO is equal to that of the cell in which the UE is currently present or is smaller yet highest and which has the HS-DSCH block status flag of TRUE as the first check cell.

When there is no such E-DCH/HS-DSCH cell, the RNC 1 selects as the first check cell an E-DCH/HS-DSCH cell which has the highest HCS_PRIO for the cell in which the UE is currently present and has the HS-DSCH block status flag of TRUE (step S48 in FIG. 13B).

Then, the RNC 1 executes the UE Differentiation cell selection algorithm <D> upon receipt of an RRC Connection Request (step S52 in FIG. 13B).

When there is no E-DCH/HS-DSCH cell with the HS-DSCH block status flag being TRUE (step S47 in FIG. 13B), if there is at least one HS-DSCH cell with the HS-DSCH block status flag being FALSE in the E-DCH/HS-DSCH Preferred Inter Frequency Cell List (step S49 in FIG. 13B), the RNC 1 selects an HS-DSCH cell whose HCS_PRIO is equal to that of the cell in which the UE is currently present or is smaller yet highest and has the HS-DSCH block status flag being FALSE as the first check cell.

When there is no such HS-DSCH cell, the RNC 1 selects as the first cell an HS-DSCH cell which has the highest HCS_PRIO for the cell in which the UE is currently present and has the HS-DSCH block status flag of FALSE (step S50 in FIG. 13B).

Then, the RNC 1 executes the UE Differentiation cell selection algorithm <D> upon receipt of an RRC Connection Request (step S52 in FIG. 13B).

If there is no HS-DSCH cell with the HS-DSCH block status flag being FALSE (step S49 in FIG. 13B), the RNC 1 selects an HS-DSCH cell whose HCS_PRIO is equal to that of the cell in which the UE is currently present or is smaller yet highest and has the HS-DSCH block status flag of TRUE as the first check cell in the E-DCH/HS-DSCH Preferred Inter Frequency Cell List.

When there is no such HS-DSCH cell, the RNC 1 selects as the first check cell an HS-DSCH cell which has the highest HCS_PRIO for the cell in which the UE is currently present and has the HS-DSCH block status flag of TRUE (step S51 in FIG. 13B).

Then, the RNC 1 executes the UE Differentiation cell selection algorithm <D> upon receipt of an RRC Connection Request (step S52 in FIG. 13B).

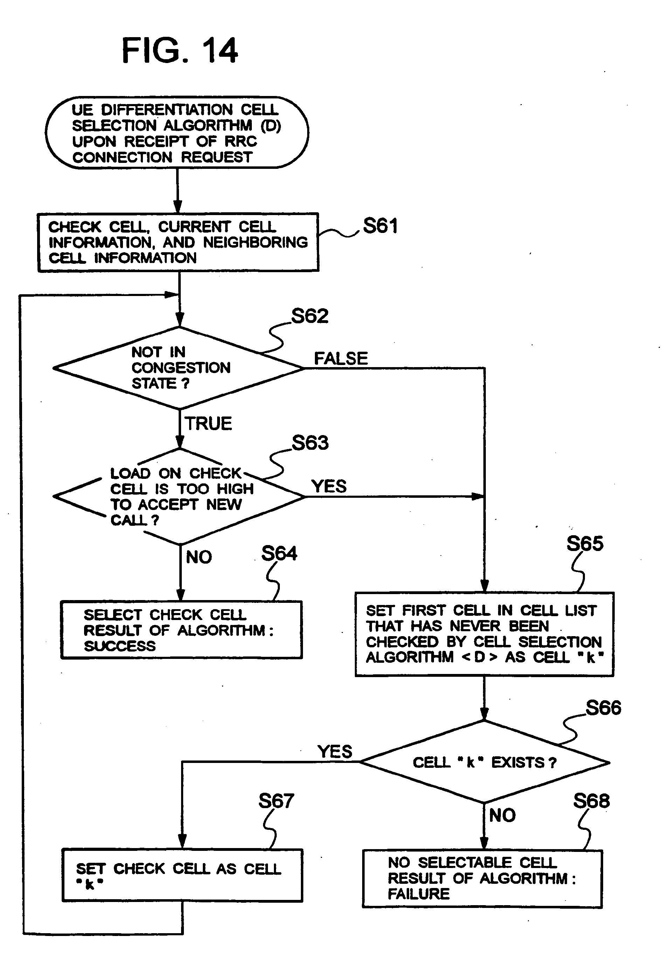

FIG. 14 is a flowchart illustrating the operation of the UE Differentiation cell selection algorithm <D> which is executed upon receipt of an RRC Connection Request in the first exemplary embodiment of the invention. With reference to FIG. 14, the UE Differentiation cell selection algorithm <D> upon receipt of an RRC Connection Request in the first exemplary embodiment of the invention will be described.

The UE Differentiation cell selection algorithm <D> upon receipt of an RRC Connection Request is started using as input parameters a check cell which is determined through the operations shown in FIGS. 11 to 13, a cell list appropriate for the type of a UE, the current cell information which was used by the UE for transmission of an RRC Connection Request which is shown in FIG. 4, and cell information on the cell in which the UE is currently present and neighboring cells of different frequencies which are controlled via the same antenna and use the same frequency band as that cell, which is shown in FIG. 3 (step S61 in FIG. 14).

If the check cell is not in congestion state (FALSE) (step S62 in FIG. 14), if the load on the check cell is not too large to establish an RRC Connection (step S63 in FIG. 14), the RNC 1 selects the check cell according to a cell selection algorithm and determines the result of the algorithm is a success (step S64 in FIG. 14).

If the check cell is in congestion state (step S62 in FIG. 14), or if load on the check cell is so large that an RRC Connection cannot be established (step S63 in FIG. 14), the RNC 1 designates the first cell in the cell list appropriate for the type of the UE that has never been checked by the cell selection algorithm <D> as cell "k" (step S65 in FIG. 14).

If cell "k" exists (step S66 in FIG. 14), the RNC 1 sets cell "k" as the check cell (step S67 in FIG. 14), and returns to the operation at step S62. If cell "k" does not exist (step S66 in FIG. 14), the RNC 1 determines that there is no selectable cell and the result of the algorithm is a failure (step S68 in FIG. 14).

In the above-described manner, the UE Differentiation cell selection algorithm <D> upon receipt of an RRC Connection Request outputs the result of the algorithm and a selected cell.

As described above, in the first exemplary embodiment of the invention, the cell selection algorithm executed by the RNC 1 upon receipt of an RRC Connection Request preferentially selects an E-DCH/HS-DSCH-service non-supporting cell for the E-DCH/HS-DSCH service-incapable UE 4, preferentially selects an HS-DSCH cell for the HS-DSCH capable UE 5, and preferentially selects an E-DCH/HS-DSCH cell for the E-DCH/HS-DSCH capable UE 6.

Accordingly, it is possible to settle a UE in a cell which can provide a service implementable by the UE.

In addition, the first exemplary embodiment of the invention selects a cell based on the value of the HS-DSCH block status flag which indicates whether a new HSDPA service can be provided at the present point in time in an HS-DSCH cell which can provide a high-speed downlink HSDPA service as well as the value of the E-DCH block status flag which indicates whether a new HSUPA service can be provided in an E-DCH/HS-DSCH cell in which not only a high-speed downlink HSDPA service but a high-speed uplink HSUPA service can be provided.

Therefore, it is possible to settle a UE in a cell which can provide a service implementable by the UE at a point when there is an establishment request.

Furthermore, in the first exemplary embodiment of the invention, the RNC 1 grasps HCS_PRIO of all the cells, and gives lower priority of selection to a cell of a different frequency that has HCS_PRIO higher than that of the cell in which the UE is currently present based on the HCS_PRIO of the cell in which the UE is currently present and that of cells of different frequencies that are controlled via the same antenna.

Accordingly, it is possible not select a cell of a different frequency which was determined by the UE to be of poor quality when the UE issued an establishment request as much as possible and preferentially select a cell which is expected to have good quality for the UE.

Meanwhile, the first exemplary embodiment of the invention uses the capability of a UE and/or versions supported by the UE, the type of a service the UE is going to start, an establishment cause, presence/absence of protocol errors, which are indicated in the first radio connection request (RRC Connection Request) message from the UE, and the internal data 15.

Accordingly, the RNC 1 can determine a service that can be provided to the UE in advance.

In addition, in the first exemplary embodiment of the invention, the RNC 1 manages load information for all the cells it controls, and compares an increase in load that would result from addition of a UE with a predetermined threshold value in order to determine whether the UE can be settled in a cell selected for the UE by the cell selection algorithm.

If the load on the cell exceeds the threshold value, the next candidate cell is selected in a cell list which is appropriate for the capability of the UE, so that establishment of an RRC Connection for the UE in another cell can be guaranteed.

As a result, according to the cell selection algorithm of the present invention, an E-DCH/HS-DSCH-service non-supporting cell can be preferentially selected for an E-DCH/HS-DSCH service-incapable UE, an HS-DSCH cell can be preferentially selected for an HS-DSCH capable UE, and an E-DCH/HS-DSCH cell can be preferentially selected for an E-DCH/HS-DSCH capable UE, upon any one of the triggers:
1. When the first radio connection request (RRC Connection Request) message is received;
2. When there is a change of channel type from a shared channel to a dedicated channel (CTS FACH (Forward Access Channel) to DCH) upon receipt of a report on traffic increase from a UE or detection of increase in transfer buffer in the RNC during connection to a packet service on a shared channel;
3. When a report on quality degradation in the frequency band of the current cell from a UE is received and an inter-frequency HO (Handover) to a cell of a different frequency which is controlled via the same antenna is carried out; and
4. When a service connection request (RAB (Radio Access Bearer) Assignment Request) message is received from a core network (CN) during an RRC Connection on a shared channel.

The first exemplary advantage according to the invention is to enable a UE to be settled in a cell which can provide a service implementable by the UE with the configurations and operations described above.

### Second Exemplary Embodiment

While a second exemplary embodiment of the invention has a basic configuration similar to that of the first exemplary embodiment of the invention described above, it adds a further device to the UE Differentiation algorithm which is executed when there is a change in channel type from a shared channel to a dedicated channel (CTS FACH to DCH) upon receipt of a report on traffic increase from a UE or detection of increase in transfer buffer in an RNC for a UE which is connected to a packet service on a shared channel.

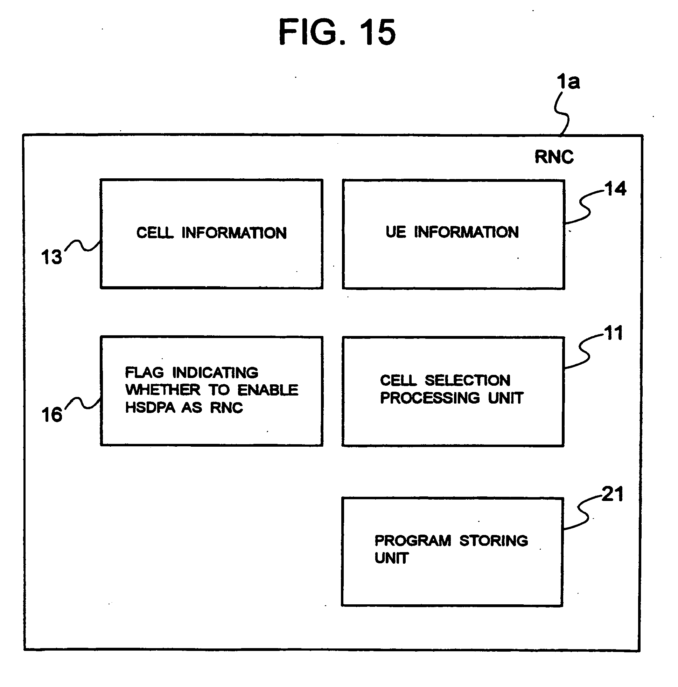

FIG. 15 is a block diagram showing the internal configuration of an RNC according to the second exemplary embodiment of the invention. In FIG. 15, an RNC 1a includes a cell selection processing unit 11, and maintains cell information 13, UE information 14, and a flag 16 which indicates whether to enable HSDPA as an RNC. The cell information 13, the cell selection processing unit 11, and the flag 16 which indicates whether to enable HSDPA as an RNC are the same as in the first exemplary embodiment of the invention described above.

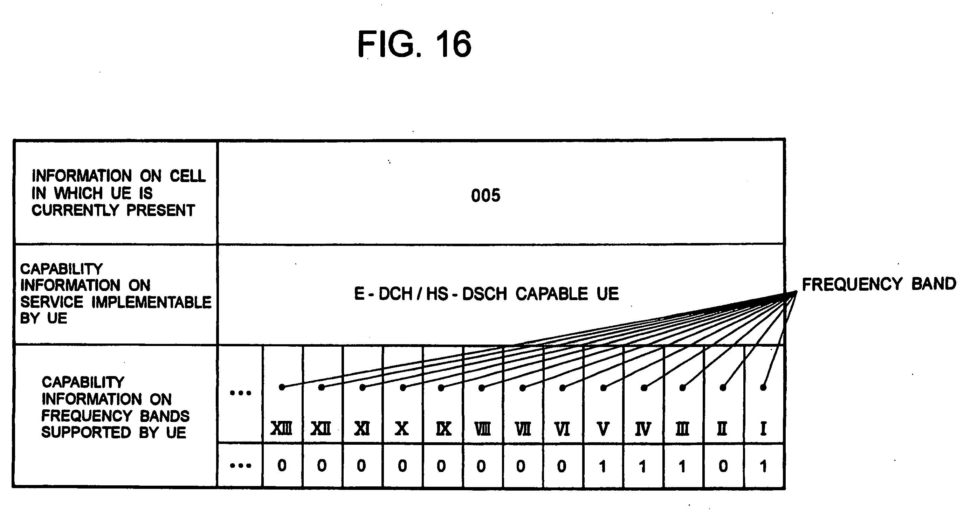

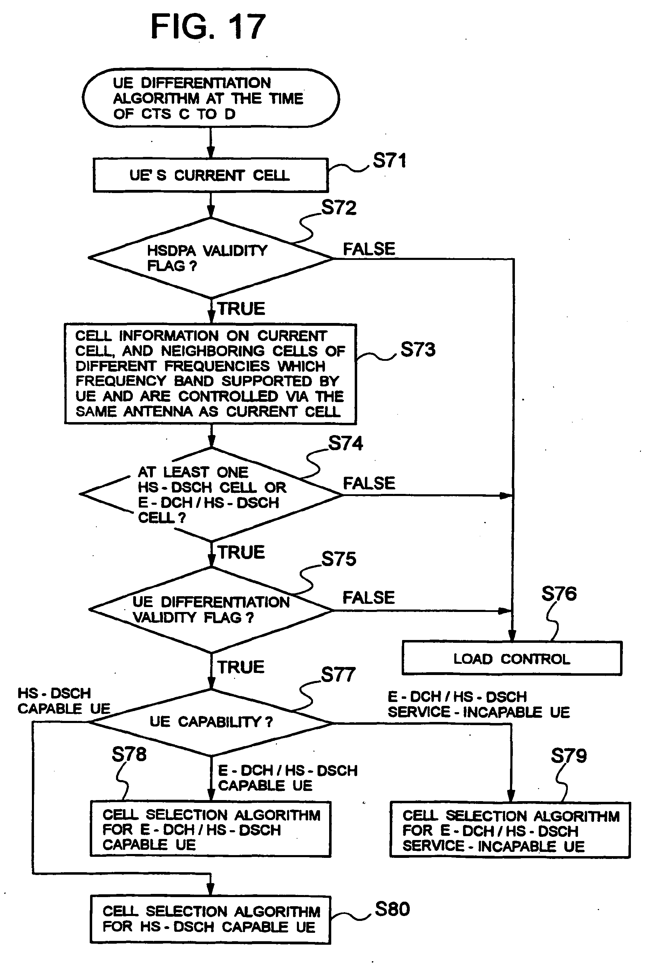

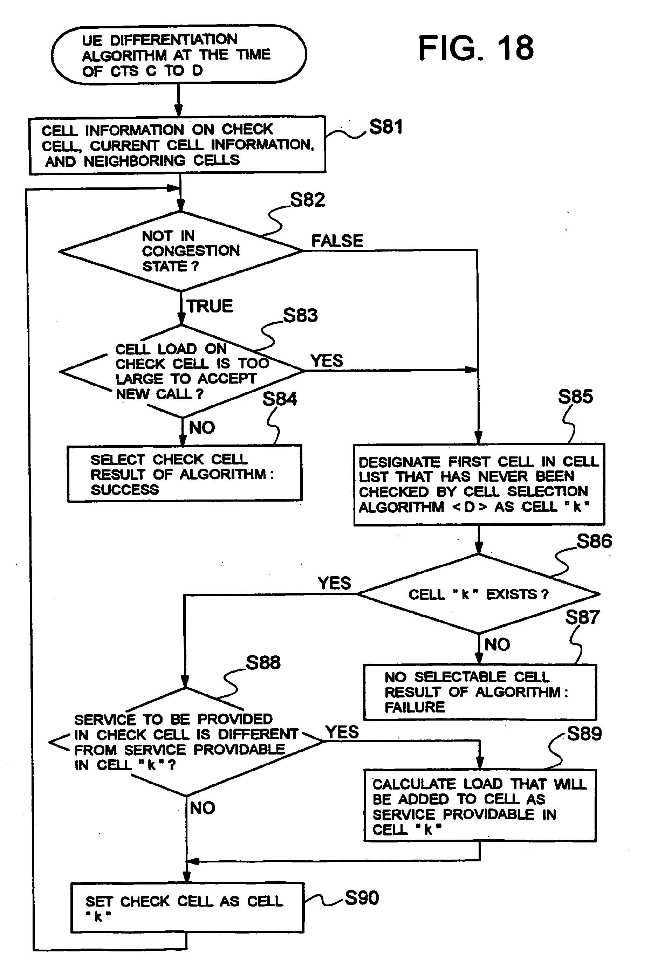

The RNC 1a further has a program storing unit 21 in which a program for a priority cell selection method is stored. In the program storing unit 21, a program for the priority cell selection method which is illustrated in flowcharts in FIGS. 17 and 18 to be discussed below is stored. The cell selection processing unit 11 reads out the program for the priority cell selection method from the program storing unit 21 and executes priority cell selection processing. FIG. 16 illustrates the detailed structure of the UE information 14 shown in FIG. 15. In FIG. 16, the RNC 1a maintains information on a cell in which a UE is currently present and UE capability information as the UE information 14.

The information on the cell in which the UE is currently present indicates a cell which contains a shared channel on which an RRC Connection is established.

The UE capability information indicates a supported packet service, such as an E-DCH/HS-DSCH service-incapable UE 4, an HS-DSCH capable UE 5, and an E-DCH/HS-DSCH capable UE 6.

The E-DCH/HS-DSCH service-incapable UE 4 can support only low-rate services, the HS-DSCH capable UE 5 can support low-rate services and HSDPA services, and the E-DCH/HS-DSCH capable UE 6 can support low-rate services, HSDPA services, and HSUPA/HSDPA services.

The UE capability information also includes information on all frequency bands that can be supported by the UE.

These are determined from a response of RRC Connection establishment completion from a UE at the time of establishing an RRC Connection.

The configuration of the RNC 1a according to the second exemplary embodiment of the invention has been described. The method for determining UE capability shown in FIG. 16 is well-known to those skilled in the art, and although it does not directly pertain to the present invention, the present invention uses this information.

FIG. 17 is a flowchart illustrating the operation of the UE Differentiation algorithm at the time of CTS CtoD in the second exemplary embodiment of the invention. With reference to FIG. 17, the operation of the UE Differentiation algorithm at the time of CTS CtoD in the second exemplary embodiment of the invention will be described.

When there is a channel type change from the shared channel to a dedicated channel (CTS FACH to DCH) for a UE which is currently connected to a packet service on a shared channel upon receipt of a report on traffic increase from the UE or detection of increase in transfer buffer in the RNC 1a, the RNC 1a starts the UE Differentiation algorithm (step S71 in FIG. 17).

The RNC 1a checks the flag 16 which indicates whether to enable HSDPA as an RNC (step S72 in FIG. 17). If the flag is invalid (FALSE), the RNC 1a selects a cell according to the load control algorithm shown in FIG. 7 (step S76 in FIG. 17).

If the flag is valid (TRUE), the RCN 1a retrieves information on the cell in which the UE is currently present and cells of different frequencies which are controlled via the same antenna from FIG. 3, and excludes any cell of a frequency band which is not included in information on all the frequency bands that are supported by the UE, which is shown in FIG. 16 (step S73 in FIG. 17).

The RNC 1a checks whether remaining cells include at least one HS-DSCH cell or E-DCH/HS-DSCH cell (step S74 in FIG. 17). If neither is included, the RNC 1a selects a cell according to the load control algorithm illustrated in FIG. 7 (step S76 in FIG. 17).

If there is an HS-DSCH cell or an E-DCH/HS-DSCH cell, the RNC 1a checks the validity flag for the UE Differentiation algorithm (step S75 in FIG. 17). If the flag is invalid (FALSE), the RNC 1a selects a cell according to the load control algorithm shown in FIG. 7 (step S76 in FIG. 17).

The RNC 1a checks the UE capability information shown in FIG. 14 (step S77 in FIG. 17), and if the UE is an E-DCH/HS-DSCH service-incapable UE 4, the RNC 1a executes a cell selection algorithm <AA> for the E-DCH/HS-DSCH service-incapable UE 4 (step S79 in FIG. 17).

If the UE is the HS-DSCH capable UE 5, the RNC 1a executes a cell selection algorithm <BB> for the HS-DSCH capable UE 5 (step S80 in FIG. 17). If the UE is the E-DCH/HS-DSCH capable UE 6, the RNC 1a executes a cell selection algorithm <CC> for the E-DCH/HS-DSCH capable UE 6 (step S78 in FIG. 17).

Cell lists for the cell selection algorithm <AA> for the E-DCH/HS-DSCH service-incapable UE 4, the cell selection algorithm <BB> for the HS-DSCH capable UE 5, and the cell selection algorithm <CC> for the E-DCH/HS-DSCH capable UE 6 are ones sorted by using the sort keys used in the first exemplary embodiment of the invention described above on cells that are left after the operation at step S73.

Next, the procedure for selecting the first cell for checking in the cell selection algorithm <AA> for the E-DCH/HS-DSCH service-incapable UE 4, the cell selection algorithm <BB> for the HS-DSCH capable UE 5, and the cell selection algorithm <CC> for the E-DCH/HS-DSCH capable UE 6 is the same as the flowcharts shown in FIGS. 11 to 13.

As the UE Differentiation cell selection algorithm for the first cell for checking, a UE Differentiation cell selection algorithm <E> at the time of CTS CtoD is executed.

In FIG. 11, after the first cell for checking is selected, load that will be added to the cell as the initial rate of DCH is calculated.

In FIG. 12, after the first cell for checking is selected, if that cell is an HS-DSCH cell with the HS-DSCH block status flag being FALSE or an E-DCH/HS-DSCH cell with the HS-DSCH block status flag being FALSE, load that will be added to the cell as the initial rate of HS-DSCH is calculated.

Otherwise, load that will be added to the cell as the initial rate of DCH is calculated.

In FIGS. 13A and 13B, after the first cell for checking is selected, if the cell is an E-DCH/HS-DSCH cell with the HS-DSCH block status flag being FALSE and the E-DCH block status flag being FALSE, load that will be added to the cell as E-DCH/HS-DSCH is calculated.

If the cell is an E-DCH/HS-DSCH cell with the HS-DSCH block status flag being FALSE and the E-DCH block status flag being TRUE, or an HS-DSCH cell with the HS-DSCH block status flag being FALSE, load that will be added to the cell as the initial rate of HS-DSCH is calculated.

Otherwise, load that will be added to the cell as the initial rate of DCH is calculated.

FIG. 18 is a flowchart illustrating the operation of the UE Differentiation cell selection algorithm <E> at the time of CTS CtoD in the second exemplary embodiment of the invention. With reference to FIG. 18, the operation of the UE Differentiation cell selection algorithm <E> at the time of CTS CtoD in the second exemplary embodiment of the invention will be described.

The UE Differentiation cell selection algorithm <E> at the time of CTS CtoD is started using as input parameters a check cell which is determined through the operations of FIGS. 11 to 13A and 13B, a cell list appropriate for a UE type, the current cell information of FIG. 3, cell information on the cell in which the UE is currently present and neighboring cells of different frequencies which are controlled via the same antenna and use the same frequency band as that cell, which is shown FIG. 3 (step S81 in FIG. 18).

If the check cell is not in congestion state (FALSE) (step S82 in FIG. 18), the RNC 1a designates the first cell in the cell list appropriate for the type of the UE that has never been checked by the cell selection algorithm <D> as cell "k" (step S85 in FIG. 18).

When the cell is in congestion state (TRUE) (step S82 in FIG. 18), if load that will be added due to the UE is not too large to be acceptable with respect to the load on the check cell (step S83 in FIG. 18), the RNC 1a selects the check cell according to the cell selection algorithm and determines the result of the algorithm is a success (step S84 in FIG. 18).

If the load is too large to be acceptable (step S83 in FIG. 18), the RNC 1a designates the first cell in the cell list appropriate for the type of the UE that has never been checked by the cell selection algorithm <D> as cell "k" (step S85 in FIG. 18).

If cell "k" does not exist (step S86 in FIG. 18), the RNC 1a determines that there is no selectable cell and the result of the algorithm is a failure (step S87 in FIG. 18).

When cell "k" exists (step S86 in FIG. 18), if a service which was to be provided in the check cell (DCH, HS-DSCH, or E-DCH/HS-DSCH) is different from a service that can be provided in cell "k" (DCHor HS-DSCH or E-DCH/HS-DSCH) (step S88 in FIG. 18), the RNC 1a calculates load that will be added to the cell as a service that can be provided in cell "k" (step S89 in FIG. 18).

And the RNC 1a sets the check cell as cell "k" (step S90 in FIG. 18), and returns to the operation at step S82.

If the service which was to be provided in the check cell is not different from the service that can be provided in cell "k" (step S88 in FIG. 18), the RNC 1a sets the check cell as cell "k" (step S90 in FIG. 18), and returns to the operation at step S82.

In the above-described manner, the UE Differentiation cell selection algorithm <E> at the time of CTS CtoD outputs the result of the algorithm and a selected cell.

As described above, the second exemplary advantage according to the invention is to enable a UE to be settled in a cell which can provide a service implementable by the UE since the cell selection algorithm performed by the RNC 1a preferentially selects an E-DCH/HS-DSCH service non-supporting cell for the E-DCH/HS-DSCH service-incapable UE 4, preferentially selects an HS-DSCH cell for the HS-DSCH capable UE 5, and preferentially selects an E-DCH/HS-DSCH cell for the E-DCH/HS-DSCH capable UE 6.

### Third Exemplary Embodiment

While a third exemplary embodiment of the invention has a basic configuration similar to that of the first exemplary embodiment of the invention described above, it adds a further device to the UE Differentiation algorithm which is executed when a report on quality degradation in the frequency band of the current cell is received from a UE and an inter-frequency HO (handover) to a cell of a different frequency which is controlled via the same antenna is carried out.

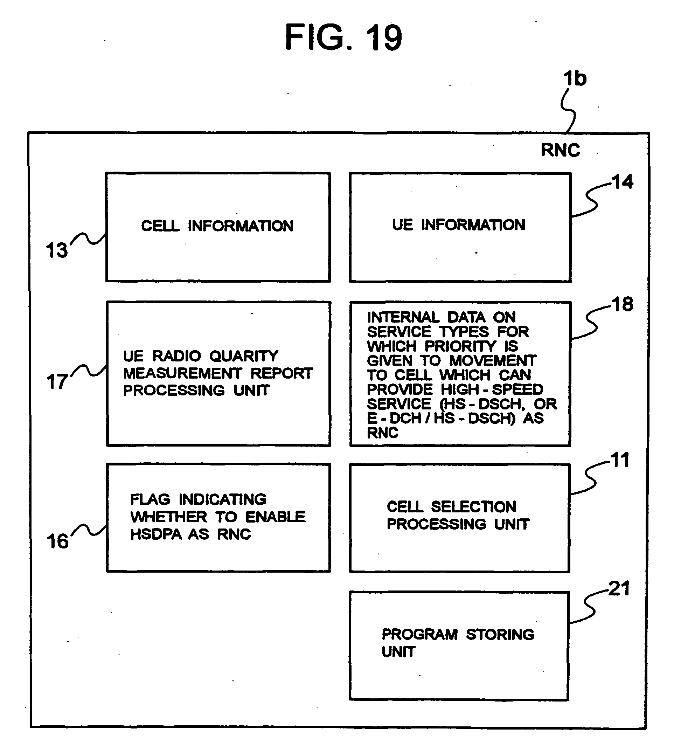

FIG. 19 is a block diagram showing the internal configuration of an RNC according to the third exemplary embodiment of the invention.

In FIG. 19, an RNC 1b includes a cell selection processing unit 11 and a UE radio quality measurement report processing unit 17, and maintains cell information 13, UE information 14, internal data 18 on service types for which priority is given to movement to a cell which can provide a high-speed service (HS-DSCH, or E-DCH/HS-DSCH) as an RNC (hereinafter internal data on service types), and a flag 16 which indicates whether to enable HSDPA as an RNC.

The cell information 13, UE information 14, cell selection processing unit 11, and the flag 16 which indicates whether to enable HSDPA as an RNC are the same as in the first exemplary embodiment of the invention described above.

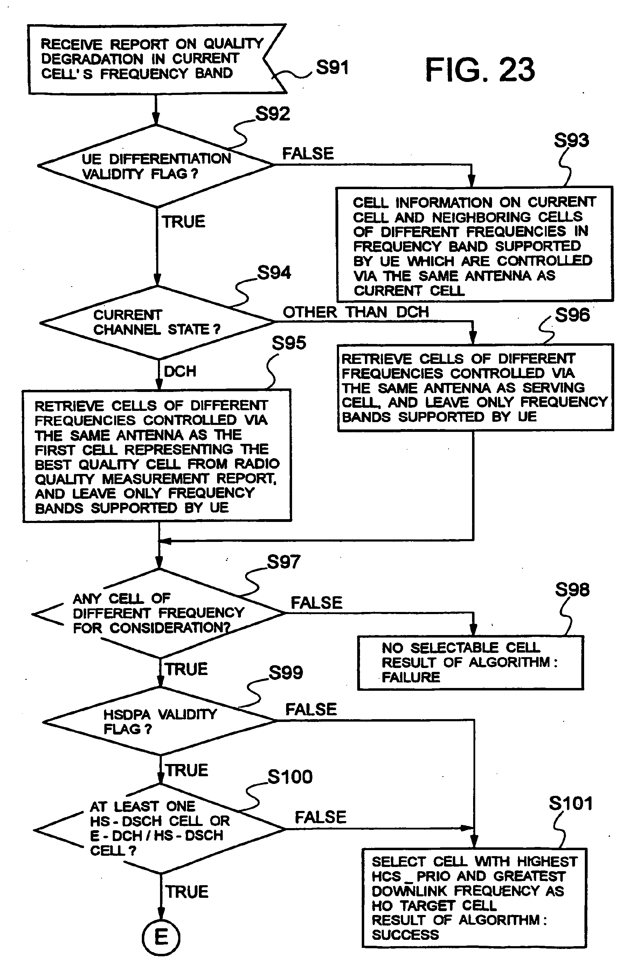

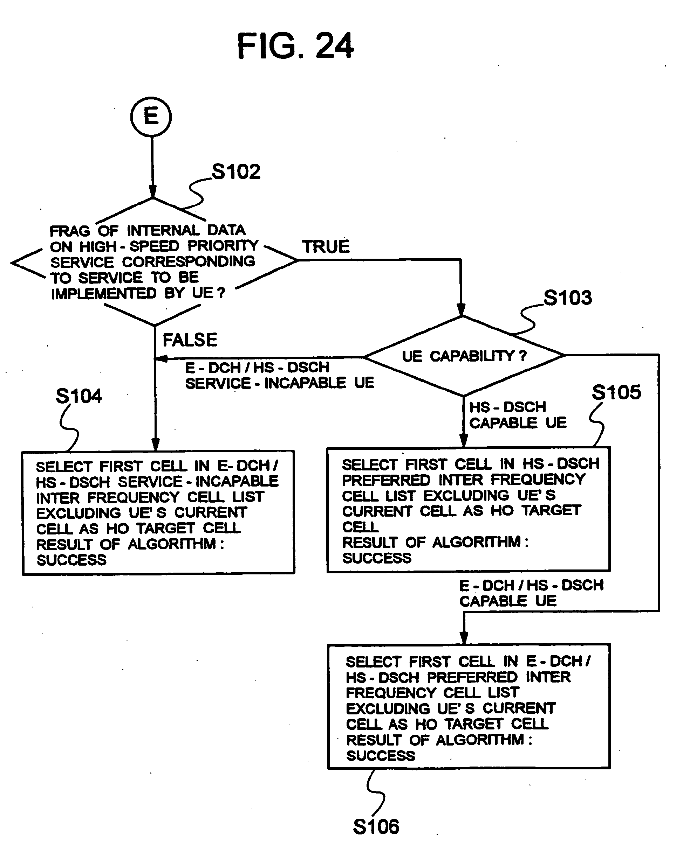

The RNC 1 further includes a program storing unit 21 in which a program for a priority cell selection method is stored. In the program storing unit 21, a program for the priority cell selection method which is illustrated in flowcharts in FIGS. 23 and 24 to be discussed below is stored.

The cell selection processing unit 11 reads out the program for the priority cell selection method from the program storing unit 21 and executes priority cell selection processing.

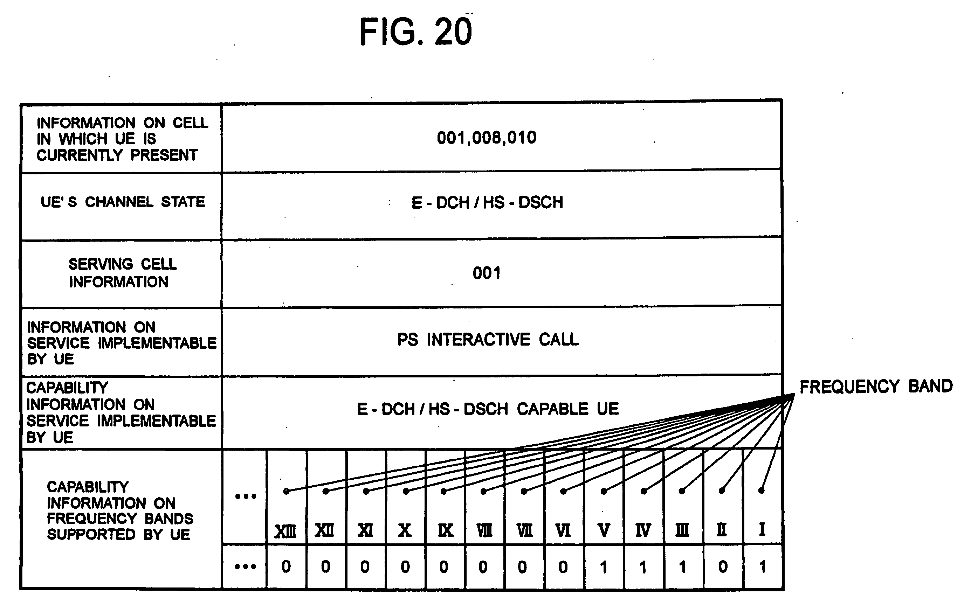

FIG. 20 shows the detailed structure of the UE information 14 shown in FIG. 19. In FIG. 20, the RNC 1b maintains as the UE information 14 information on a cell in which a UE is currently present, the present channel state of the UE, information on a serving cell for a case the UE is provided with an HS-DSCH or E-DCH/HS-DSCH service, a service implemented by the UE, and UE capability information.

Information on the cell in which the UE is currently present represents a plurality of Active Set Cells to which the UE makes a connection on a dedicated channel.

The channel state of the UE includes DCH State in which a low-rate service is provided on a dedicated channel, HS-DSCH State in which an HSDPA service is provided on downlink, and E-DCH/HS-DSCH State in which HSDPA/HSUPA services are provided on uplink and downlink, respectively.

By way of example, services implemented by the UE may include CS Conversational for providing a voice phone and/or a videophone service, PS Conversational for providing a VoIP (Voice over IP) service, CS Streaming or PS Streaming for providing an immediate data transfer service, PS Interactive for providing a web browsing or chat service, and PS Background for providing a mail transfer service.

The UE capability information indicates a supported packet service, such as the E-DCH/HS-DSCH service-incapable UE 4, HS-DSCH capable UE 5, and E-DCH/HS-DSCH capable UE 6.

The E-DCH/HS-DSCH service-incapable UE 4 can only support low-rate services, the HS-DSCH capable UE 5 can support low-rate services and HSDPA services, and the E-DCH/HS-DSCH capable UE 6 can support low-rate services, HSDPA service, and HSUPA/HSDPA services.

The UE capability information also includes information on all frequency bands that are supported by a UE.

These are determined from a response of RRC Connection establishment completion from the UE at the time of establishing an RRC Connection.

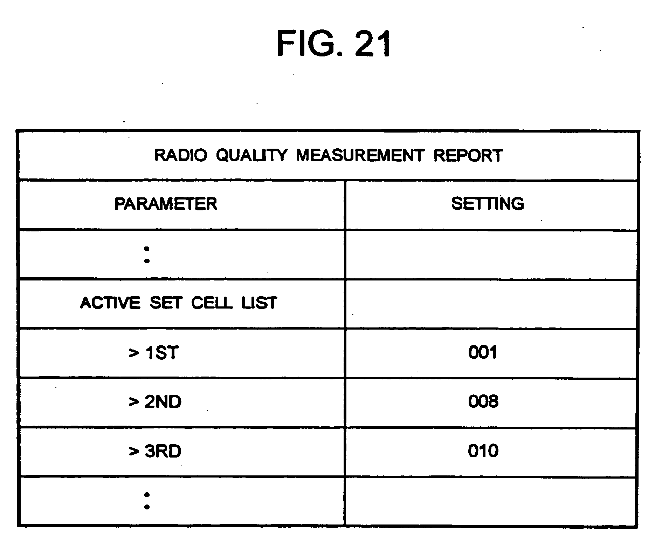

FIG. 21 shows the structure of a radio quality measurement report from the UE which is received by the UE radio quality measurement report processing unit 17 shown in FIG. 19. In FIG. 21, the radio quality measurement report from the UE contains a list of Active Set Cells to which the UE is currently connected, and a cell that has the best quality is included as the first cell.

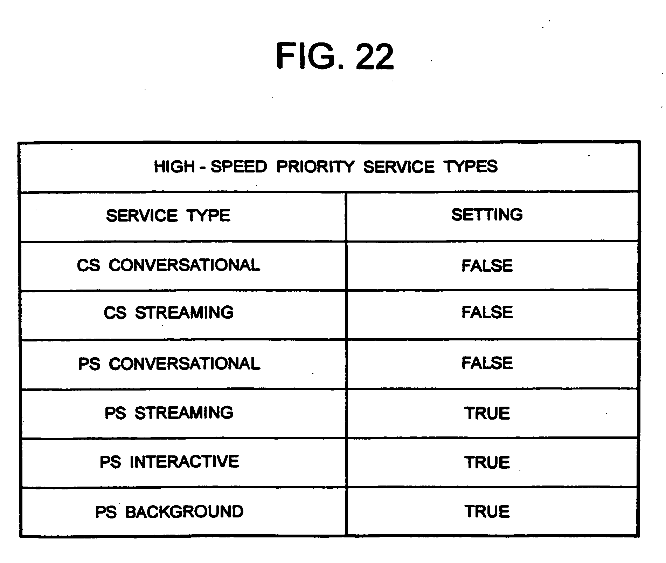

FIG. 22 shows the structure of the internal data on service types 18 shown in FIG. 19.

As shown in FIG. 22, in the internal data on service types 18, a flag (TRUE/FALSE) is set for each of CS Conversational, CS Streaming, PS Conversational, PS Streaming, PS Interactive, and PS Background services, which are services provided by the RNC 1b to the UE.

A flag of TRUE means to preferentially move the UE to a cell which can provide a high-speed service, and FALSE means to preferentially move the UE to a cell which cannot provide a high-speed service.

The maintenance itself of the UE information 14 shown in FIG. 20 in the internal data of the RNC 1b is well-known to those skilled in the art, and although it does not directly pertain to the present invention, the present invention uses this information.

The contents of the radio quality measurement report from the UE shown in FIG. 21 itself is well-known to those skilled in the art, and although it does not directly pertain to the present invention, the present invention uses this information.

FIGS. 23 and 24 are flowcharts illustrating the operation of the UE Differentiation algorithm which is executed when a report on quality degradation in the frequency band of the current cell is received from a UE and an inter-frequency HO to a cell of a different frequency which is controlled via the same antenna is carried out in the third exemplary embodiment of the invention.

With reference to FIGS. 23 and 24, description will be given of the operation of the UE Differentiation algorithm executed when a report on quality degradation in the frequency band of the current cell is received from a UE and an inter-frequency HO to a cell of a different frequency which is controlled via the same antenna is carried out in the third exemplary embodiment of the invention.

Upon receipt of a report on quality degradation in the frequency band of the current cell from the UE, the RNC 1b starts the UE Differentiation algorithm for selecting a target cell for an inter-frequency HO to a cell of a different frequency which is controlled via the same antenna (step S91 in FIG. 23).

The RNC 1b checks the validity flag of the UE Differentiation algorithm. If the flag is invalid (FALSE) (step S92 in FIG. 23), the RNC 1b obtains from FIG. 3 cells of different frequencies which are controlled via the same antenna as the cell in which the UE is currently present, which is shown in FIG. 20, and randomly selects a target cell (step S93 in FIG. 23).

When the flag is valid (TRUE) (step S92 in FIG. 23), if the present channel state of the UE shown in FIG. 20 is DCH State (step S94 in FIG. 23), the RNC 1b obtains from FIG. 3 any cell of a different frequency which is controlled via the same antenna as the first cell in the radio quality measurement report from the UE shown in FIG. 21 which represents a cell with the best quality.

And the RNC 1b excludes any cell of a frequency band that is not included in the information on all frequency bands supported by the UE shown in FIG. 20 (step S95 in FIG. 23).

If the present channel state is other than DCH State (step S94 in FIG. 23), the RNC 1b obtains from FIG. 3 cells of different frequencies which are controlled via the same antenna as the serving cell shown in FIG. 20.

And the RNC 1b excludes any cell of a frequency band which is not included in the information on all frequency bands supported by the UE shown in FIG. 20 (step S96 in FIG. 23).

If there is no cell of a different frequency for consideration (FALSE) (step S97 in FIG. 23), the RNC 1b determines that there is no selectable cell and the result of the algorithm is a failure (step S98 in FIG. 23).

If there is at least one cell of a different frequency for consideration (step S97 in FIG. 23), the RNC 1b checks the flag 16 which indicates whether to enable HSDPA as an RNC (step S99 in FIG. 23).

If the flag is invalid (FALSE), the RNC 1b selects as the HO target cell a cell that has the highest HCS_PRIO and the greatest downlink frequency from among remaining cells of different frequencies.

And the RNC 1b determines that the result of the algorithm is a success (step S101 in FIG. 23).

If the flag is valid (TRUE), the RNC 1b checks whether at least one HS-DSCH cell or E-DCH/HS-DSCH cell is included in remaining cells of different frequencies (step S100 in FIG. 23).

If neither is included, the RNC 1b selects as the HO target cell a cell which has the highest HCS_PRIO and the greatest downlink frequency.

And the RNC 1b determines that the result of the algorithm is a success (step S101 in FIG. 23).

When there is an HS-DSCH cell or an E-DCH/HS-DSCH cell, if the flag of the internal data on a high-speed priority service shown in FIG. 22 which corresponds to the service to be implemented by the UE shown in FIG. 20 is invalid (FALSE) (step S102 in FIG. 24), the RNC 1b selects the first cell in an E-DCH/HS-DSCH Service Non-supporting Inter Frequency Cell List excluding the cell in which the UE is currently present.

And the RNC 1b determines that the result of the algorithm is a success (step S104 in FIG. 24).

If the flag is valid (TRUE) (step S102 in FIG. 24), the RNC 1b checks the UE capability information shown in FIG. 20, and if it shows that the UE is an E-DCH/HS-DSCH service-incapable UE 4 (step S103 in FIG. 24), the RNC 1b selects the first cell in the E-DCH/HS-DSCH Service Non-supporting Inter Frequency Cell List excluding the cell in which the UE is currently present.

And the RNC 1b determines the result of the algorithm is a success (step S104 in FIG. 24).

If the UE is an HS-DSCH capable UE 5 (step S103 in FIG. 24), the RNC 1b selects the first cell in the HS-DSCH Preferred Inter Frequency Cell List excluding the cell in which the UE is currently present.

And the RNC 1b determines the result of the algorithm is a success (step S105 in FIG. 24).

If the UE is an E-DCH/HS-DSCH capable UE 6 (step S103 in FIG. 24), the RNC 1b selects the first cell in the E-DCH/HS-DSCH Preferred Inter Frequency Cell List excluding the cell in which the UE is currently present.

And the RNC 1b determines that the result of the algorithm is a success (step S106 in FIG. 24).

The third exemplary advantage according to the invention is that a selected cell is output by the UE Differentiation algorithm which is executed when a report on quality degradation in the frequency band of the current cell is received from the UE and an inter-frequency HO is carried out to a cell of a different frequency controlled via the same antenna.

If an inter-frequency HO to the selected cell has failed, the next candidate cell may be selected in each cell list and an inter-frequency HO to that cell may be attempted.

Thereby, it enables a UE to be settled in a cell which can provide a service implementable by the UE.

### Fourth Exemplary Embodiment

While a fourth exemplary embodiment of the invention has a basic configuration similar to that of the first exemplary embodiment of the invention described above, it adds a further device to the UE Differentiation algorithm which is executed when a service connection request message is received from a core network (CN) during an RRC Connection on a shared channel.

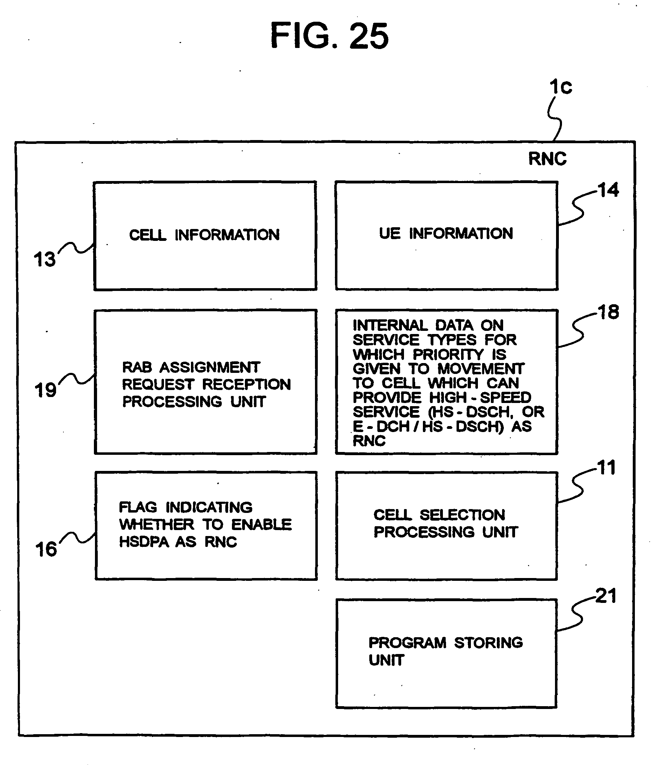

FIG. 25 is a block diagram showing the internal configuration of an RNC according to the fourth exemplary embodiment of the invention.

In FIG. 25, an RNC 1c includes a cell selection processing unit 11 and an RAB Assignment Request message reception processing unit 19, and maintains cell information 13, UE information 14, internal data on service types 18, and a flag 16 which indicates whether to enable HSDPA as an RNC.

The cell information 13, the cell selection processing unit 11, and the flag 16 which indicates whether to enable HSDPA as an RNC are the same as in the first exemplary embodiment of the invention described above. The internal data on service types 18 has the same contents as in the third exemplary embodiment of the invention described above.

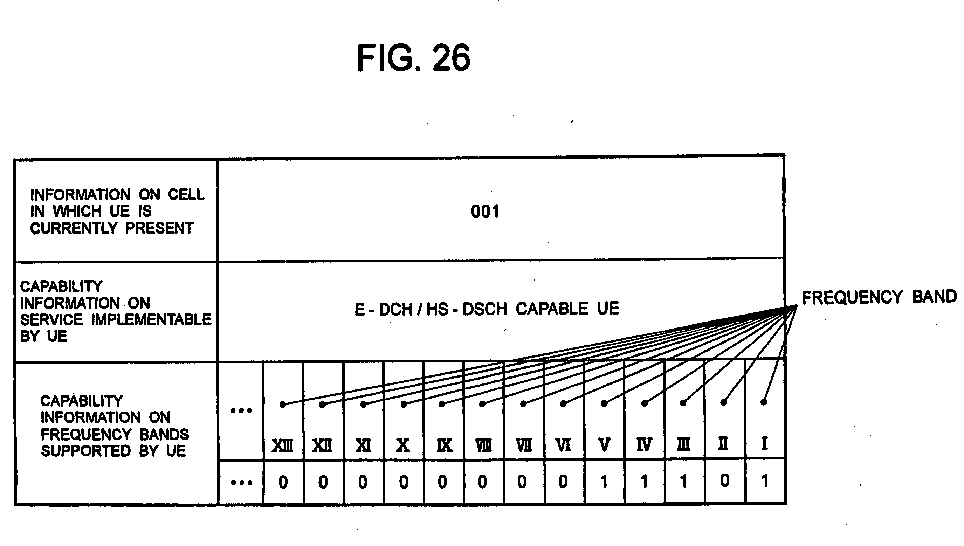

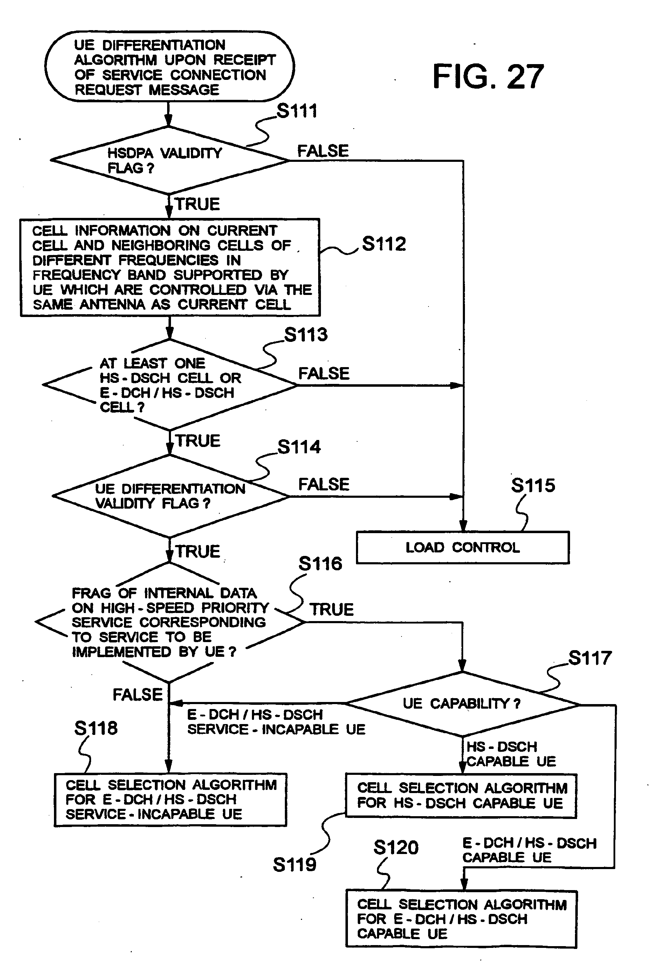

The RNC 1c further has a program storing unit 21 in which a program for a priority cell selection method is stored. In the program storing unit 21, a program for the priority cell selection method which is illustrated in a flowchart in FIG. 27 to be discussed below is stored. The cell selection processing unit 11 reads out the program for the priority cell selection method from the program storing unit 21 and executes priority cell selection processing. FIG. 26 shows the detailed structure of the UE information 14 shown in FIG. 25. In FIG. 26, the RNC 1c maintains information on a cell in which a UE is currently present and UE capability information as the UE information 14.

The information on a cell in which a UE is currently present indicates a cell which contains a shared channel on which an RRC Connection is being established.

The UE capability information indicates a supported packet service, such as an E-DCH/HS-DSCH service-incapable UE 4, an HS-DSCH capable UE 5, and an E-DCH/HS-DSCH capable UE 6.

The E-DCH/HS-DSCH service-incapable UE 4 can support only a low-rate service, the HS-DSCH capable UE 5 can support a low-rate service and an HSDPA service, and the E-DCH/HS-DSCH capable UE 6 can support a low-rate service, an HSDPA service, and HSUPA/HSDPA services.

The UE capability information also includes information on all frequency bands that can be supported by the UE.

These are determined from a response of RRC Connection establishment completion from a UE at the time of RRC Connection establishment.

The RAB Assignment Request message reception processing unit 19 checks establishment of which kind of service is requested in an RAB Assignment Request message.

Examples of the service may include CS Conversational for providing a voice phone and/or a videophone service, PS Conversational for providing a VoIP (Voice over IP) service, CS Streaming or PS Streaming for providing an immediate data transfer service, PS Interactive for providing a web browsing or chat service, and PS Background for providing a mail transfer service.

The configuration of the fourth exemplary embodiment of the invention has been described above. Maintenance itself of the UE information 14 shown in FIG. 26 in the internal data of the RNC 1c is well-known to those skilled in the art, and although is does not directly pertain to the present invention, the present invention uses this information.

In addition, as the RAB Assignment Request message reception processing unit 19 is well-known to those skilled in the art and does not directly pertain to the present invention, detailed description of the same is omitted.

FIG. 27 is a flowchart illustrating the operation of the UE Differentiation algorithm which is executed when a service connection request message is received from a core network (CN) during an RRC Connection on a shared channel in the fourth exemplary embodiment of the invention.

With reference to FIG. 27, description will be given of the operation of the UE Differentiation algorithm which is executed when a service connection request message is received from a core network (CN) during an RRC Connection on a shared channel in the fourth exemplary embodiment of the invention.

The RNC 1c checks the flag 16 which indicates whether to enable HSDPA as an RNC (step S111 in FIG. 27). If the flag is invalid (FALSE), the RNC 1c selects a cell according to the load control algorithm shown in FIG. 7 (step S115 in FIG. 27).

If the flag is valid (TRUE), the RNC 1c obtains information on the cell in which the UE is currently present and cells of different frequencies which are controlled via the same antenna from FIG. 3.

And the RNC 1c excludes any cell of a frequency band which is not included in the information on all frequency bands supported by the UE shown in FIG. 26 (step S112 in FIG. 27).

The RNC 1c checks whether at least one HS-DSCH cell or E-DCH/HS-DSCH cell is included in remaining cells (step S113 in FIG. 27). If neither is included, the RNC 1c selects a cell according to the load control algorithm shown in FIG. 7 (step S115 in FIG. 27).

If there is an HS-DSCH cell or an E-DCH/HS-DSCH cell, the RNC 1c checks the validity flag of the UE Differentiation algorithm (step S114 in FIG. 27). If the flag is invalid (FALSE), the RNC 1c selects a cell according to the load control algorithm shown in FIG. 7 (step S115 in FIG. 27).

If the flag is valid (TRUE), if the flag of the internal data on a high-speed priority service shown in FIG. 22 which corresponds to the service requested at the RAB Assignment Request message reception processing unit 19 is FALSE (step S116 in FIG. 27), the RNC 1c executes the cell selection algorithm <AA> for the E-DCH/HS-DSCH service-incapable UE 4 (step S118 in FIG. 27).

If the flag is TRUE (step S116 in FIG. 27), the RNC 1c checks the UE capability information shown in FIG. 26.

If the UE is an E-DCH/HS-DSCH service-incapable UE 4 (step S117 in FIG. 27), the RNC 1c executes the cell selection algorithm <AA> for the E-DCH/HS-DSCH service-incapable UE 4 (step S118 in FIG. 27).

If the UE is an HS-DSCH capable UE 5 (step S117 in FIG. 27), the RNC 1c executes the cell selection algorithm <BB> for the HS-DSCH capable UE 5 (step S119 in FIG. 27).

If the UE is an E-DCH/HS-DSCH capable UE 6 (step S117 in FIG. 27), the RNC 1c executes the cell selection algorithm <CC> for the E-DCH/HS-DSCH capable UE 6 (step S120 in FIG. 27).

Cell lists for the cell selection algorithm <AA> for the E-DCH/HS-DSCH service-incapable UE 4, the cell selection algorithm <BB> for the HS-DSCH capable UE 5, and the cell selection algorithm <CC> for the E-DCH/HS-DSCH capable UE 6 are ones sorted by using the sort keys used in the first exemplary embodiment of the invention on cells that are left after the operation at step S112 described above.

The procedure for selecting a first cell for checking in the cell selection algorithm <AA> for the E-DCH/HS-DSCH service-incapable UE 4, the cell selection algorithm <BB> for the HS-DSCH capable UE 5, and the cell selection algorithm <CC> for the E-DCH/HS-DSCH capable UE 6 is the same as the processing operations shown in FIGS. 11 to 13.

And the UE Differentiation cell selection algorithm for the first cell for checking is the same as the UE Differentiation cell selection algorithm <E> at the time of CTS CtoD illustrated in FIG. 18.

In FIG. 11, after the first cell for checking is selected, load that will be added to the cell as the initial rate of DCH is calculated.

In FIG. 12, after the first cell for checking is selected, if that cell is an HS-DSCH cell with the HS-DSCH block status flag being FALSE or an E-DCH/HS-DSCH cell with the HS-DSCH block status flag being FALSE, load that will be added to the cell as the initial rate of HS-DSCH is calculated. Otherwise, load that will be added to the cell as the initial rate of DCH is calculated.

In FIGS. 13A and 13B, after the first cell for checking is selected, if that cell is an E-DCH/HS-DSCH cell with the HS-DSCH block status flag being FALSE and the E-DCH block status flag being FALSE, load that will be added to the cell as E-DCH/HS-DSCH is calculated.

Also in FIGS. 13A and 13B, if the cell is an E-DCH/HS-DSCH cell with the HS-DSCH block status flag being FALSE and the E-DCH block status flag being TRUE, or an HS-DSCH cell with the HS-DSCH block status flag being FALSE, load that will be added to the cell as the initial rate of HS-DSCH is calculated. Otherwise, load that will be added to the cell as the initial rate of DCH is calculated.

The fourth exemplary advantage according to the invention is to enable a UE to be settled in a cell that can provide a service implementable by the UE based on a service implementable by the UE and a service for which a connection is requested by a core network.

Since the cell selection algorithm performed by the RNC 1c preferentially selects an E-DCH/HS-DSCH service non-supporting cell for the E-DCH/HS-DSCH service-incapable UE 4, preferentially selects an HS-DSCH cell for the HS-DSCH capable UE 5, and preferentially selects an E-DCH/HS-DSCH cell for the E-DCH/HS-DSCH capable UE 6.

The present invention is applicable to an IMT 2000 system architecture in which an E-DCH/HS-DSCH service non-supporting cell, an HS-DSCH cell, and an E-DCH/HS-DSCH cell which are controlled via the same antenna and use different frequencies coexist and an E-DCH/HS-DSCH service-incapable UE, an HS-DSCH capable UE, and an E-DCH/HS-DSCH capable UE are present in the same area.

In the above-described IMT 2000 system architecture, the present invention is applicable to cell selections as follows.

The first cell selection is for an RRC connection establishment when a first radio connection request (RRC Connection Request) message is received.

The second cell selection is for establishment of a dedicated channel at the time of a channel type change from a shared channel to a dedicated channel (CTS FACH to DCH) upon receipt of a traffic increase report from a UE or detection of an increase in transfer buffer in an RNC during connection to a packet service on a shared channel.

The third cell selection is for an inter-frequency HO when a quality degradation report for the frequency band of the current cell is received from a UE and an inter-frequency HO is carried out to a cell of a different frequency controlled via the same antenna.

Or the fourth cell selection is for establishment of a dedicated channel when a service connection request (RAB Assignment Request) message is received from a core network (CN) during an RRC Connection on a shared channel.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

Each feature disclosed in this specification (which term includes the claims) and/or shown in the drawings may be incorporated in the invention independently (or in combination with) any other disclosed and/or illustrated features. In particular but without limitation the features of any of the claims dependent from a particular independent claim may be introduced into that independent claim in any combination or individually.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification. In an exemplary aspect of the invention of the invention there is provided a wireless base station control station according to the present invention is a wireless base station control station which is connected to a mobile terminal through a wireless base station, the wireless base station control station including a cell selection processing unit that performs cell selection for the mobile terminal using a type of a cell of the wireless base station, information on the cell, and information on the mobile terminal.

## Claims

1. A wireless base station control station comprising:
means arranged to connect to a mobile terminal via a wireless base station (2, 3);
means arranged to control a plurality of cells of different types via said wireless base station (2, 3);
means arranged to evaluate which type of cell, of said different types, a cell of said wireless base station (2, 3) is, wherein said type of cell of said wireless base station (2, 3)is:
(i) a type of cell which is capable of providing a high-speed downlink packet access (HSDPA) service;
(ii) a type of cell which is capable of providing both a high-speed downlink packet access service and a high-speed uplink packet access (HSUPA) service; or
(iii) a type of cell which does not support HSDPA or HSUPA; and
a cell selection processing unit (11) arranged to perform cell selection from amongst said plurality of cells for said mobile terminal based on:
the type of cell identified by said evaluating means,
information on said cell, and
information on said mobile terminal.

2. The wireless base station control station according to claim 1, wherein said cell selection processing unit (11) is configured for:
selecting an HS-DSCH cell for an HS-DSCH capable first mobile terminal to which a high-speed downlink HSDPA (High Speed Downlink Packet Access) service is provided on an HS-DSCH (High Speed Downlink Shared Channel) at the time of a packet service implementation,
selecting an E-DCH/HS-DSCH cell for an E-DCH/HS-DSCH capable second mobile terminal to which said HSDPA service and a high-speed uplink HSUPA (High Speed Uplink Packet Access) service are provided on an E-DCH (Enhanced DCH)/HS-DSCH at the time of said packet service implementation, and
selecting an E-DCH/HS-DSCH service non-supporting cell for an E-DCH/HS-DSCH service-incapable third mobile terminal to which only low-speed services are provided both on said uplink and said downlink at the time of said packet service implementation.

3. The wireless base station control station according to claim 2, wherein said cell selection processing unit (11) is configured for performing said cell selection based on an HS-DSCH block status flag which indicates whether it is possible to provide a new HSDPA service at a present point in time in said HS-DSCH cell, an E-DCH block status flag which indicates whether it is possible to provide a new HSUPA service in said E-DCH/HS-DSCH cell, and hierarchization priority of all cells.

4. The wireless base station control station according to claim 2 or 3, wherein
said wireless base station control station (1, 1a, 1b) is configured for maintaining an establishment cause which is intended for a high-speed service as internal data in order to determine whether said mobile terminal is said first mobile terminal, said second mobile terminal, or said third mobile terminal, and
said cell selection processing unit (11) is configured for performing said cell selection based on capability of said mobile terminal, a version supported by said mobile terminal, a service type to be started by said mobile terminal, an establishment cause, and presence/absence of protocol errors which are indicated in a first radio connection request message from said mobile terminal.

5. The wireless base station control station according to any of claims 1 through 4, wherein
the wireless base station control station (1, 1a, 1b) is configured for managing load information of all cells controlled by the wireless base station control station (1, 1a, 1b), and
said cell selection processing unit (11) compares an increase in load that will result from addition of a mobile terminal with a predetermined threshold value in order to determine whether the mobile terminal can be settled in a cell selected for the mobile terminal, and if the cell load exceeds the threshold value, selects another candidate cell.

6. A mobile communication system comprising the wireless base station control station (1, 1a, 1b) according to any of claims 1 through 5.

7. A priority cell selection method for use in a wireless base station control station which is connectable to a mobile terminal through a wireless base station (2, 3), the method comprising:
controlling a plurality of cells of different types;
evaluating which of said different types of cell a cell of said wireless base station (2, 3) is,
wherein said type of cell of said wireless base station (2, 3)is:
(i) a type of cell which is capable of providing a high-speed downlink packet access (HSDPA) service;
(ii) a type of cell which is capable of providing both a high-speed downlink packet access service and a high-speed uplink packet access (HSUPA) service; or
(iii) a type of cell which does not support HSDPA or HSUPA; and
executing cell selection processing for performing cell selection from amongst said plurality of cells for said mobile terminal based on said type of cell identified in said evaluating step, information on said cell, and information on said mobile terminal.

8. The priority cell selection method according to claim 7, wherein
in said cell selection processing, said wireless base station control station (1, 1a, 1b)
selects an HS-DSCH cell for an HS-DSCH capable first mobile terminal to which a high-speed downlink HSDPA (High Speed Downlink Packet Access) service is provided on an HS-DSCH (High Speed Downlink Shared Channel) at the time of a packet service implementation,
selects an E-DCH/HS-DSCH cell for an E-DCH/HS-DSCH capable second mobile terminal to which said HSDPA service and a high-speed uplink HSUPA (High Speed Uplink Packet Access) service are provided on an E-DCH (Enhanced DCH)/HS-DSCH at the time of said packet service implementation, and
selects an E-DCH/HS-DSCH service non-supporting cell for an E-DCH/HS-DSCH service-incapable third mobile terminal to which only low-speed services are provided both on said uplink and said downlink at the time of said packet service implementation.

9. The priority cell selection method according to claim 8, wherein in said cell selection processing, said wireless base station control station performs the cell selection based on an HS-DSCH block status flag which indicates whether it is possible to provide a new HSDPA service at a present point in time in said HS-DSCH cell, an E-DCH block status flag which indicates whether it is possible to provide a new HSUPA service in said E-DCH/HS-DSCH cell, and hierarchization priority of all cells.

10. The priority cell selection method according to claim 8 or 9, wherein
said wireless base station control station maintains an establishment cause which is intended for a high-speed service as internal data in order to determine whether said mobile terminal is said first mobile terminal, said second mobile terminal, or said third mobile terminal, and
said wireless base station control station performs, in said cell selection processing, said cell selection based on capability of said mobile terminal, a version supported by said mobile terminal, a service type to be started by said mobile terminal, an establishment cause, and presence/absence of protocol errors which are indicated in a first radio connection request message from said mobile terminal.

11. The priority cell selection method according to any of claims 7 through 10, wherein
said wireless base station control station (1, 1a, 1b) manages load information of all cells controlled by said wireless base station control station (1, 1a, 1b), and
said cell selection processing compares an increase in load that will result from addition of a mobile terminal with a predetermined threshold value in order to determine whether the mobile terminal can be settled in a cell selected for the mobile terminal, and if the cell load exceeds the threshold value, selects another candidate cell.

12. A recording medium having recorded thereon a program for a priority cell selection method for use in a wireless base station control station (1, 1a, 1b) which is connected to a mobile terminal through a wireless base station, said program causing a computer provided in said wireless base station control station (1, 1a, 1b) to perform the method of Claim 7.

## Patentansprüche

1. Funkbasisstationssteuergerät, das aufweist:
Mittel, die zur Herstellung einer Verbindung mit einem mobilen Endgerät über eine Funkbasisstation (2, 3) eingerichtet sind;
Mittel, die zur Steuerung einer Vielzahl von Funkzellen unterschiedlicher Typen über die Funkbasisstation (2, 3) eingerichtet sind;
Mittel die dazu eingerichtet sind, zu beurteilen, zu welchem Zelltyp von den verschiedenen Typen eine Funkzelle der Funkbasisstation (2, 3) gehört, wobei der Zelltyp der Funkbasisstation (2, 3) einer der folgenden ist:
(i) ein Zelltyp, der einen Hochgeschwindigkeits-Abwärtspaket-Zugriffsdienst (HSDPA-Dienst) bereitstellen kann;
(ii) ein Zelltyp, der sowohl einen Hochgeschwindigkeits-Abwärtspaket-Zugriffsdienst als auch einen Hochgeschwindigkeits-Aufwärtspaket-Zugriffsdienst (HSUPA-Dienst) bereitstellen kann; oder
(iii) ein Zelltyp, der weder HSDPA noch HSUPA unterstützt; und
eine Zellauswahlverarbeitungseinheit (11), die dazu eingerichtet ist, die Zellauswahl unter der Vielzahl von Funkzellen für das mobile Endgerät basierend auf den folgenden Informationen durchzuführen:
dem durch die Beurteilungsmittel identifizierten Zelltyp,
Informationen über die Funkzelle, und
Informationen über das mobile Endgerät.

2. Funkbasisstationssteuergerät nach Anspruch 1, wobei die Zellauswahlverarbeitungseinheit (11) für die folgenden Operationen konfiguriert ist:
Auswahl einer HS-DSCH-Funkzelle für ein HS-DSCH-fähiges erstes mobiles Endgerät, für das zum Durchführungszeitpunkt eines Paketdienstes ein HSDPA-Dienst (Hochgeschwindigkeits-Abwärtspaket-Zugriffsdienst) auf einem HS-DSCH (gemeinsamen Hochgeschwindigkeits-Abwärtskanal) bereitgestellt wird,
Auswahl einer E-DCH/HS-DSCH-Funkzelle für ein E-DCH/HS-DSCH-fähiges zweites mobiles Endgerät, für das zum Durchführungszeitpunkt des Paketdienstes der HSDPA-Dienst und ein HSUPA-Dienst (Hochgeschwindigkeits-Aufwärtspaket-Zugriffsdienst) auf einem E-DCH (verbesserten DCH)/HS-DSCH bereitgestellt werden, und
Auswahl einer Funkzelle, die den E-DCH/HS-DSCH-Dienst nicht unterstützt, für ein E-DCH/HS-DSCH-unfähiges drittes mobiles Endgerät, für das zum Durchführungszeitpunkt des Paketdienstes sowohl auf der Aufwärtsstrecke als auch auf der Abwärtsstrecke nur langsame Dienste bereitgestellt werden.

3. Funkbasisstationssteuergerät nach Anspruch 2, wobei die Zellauswahlverarbeitungseinheit (11) zur Durchführung der Zellauswahl auf der Basis eines HS-DSCH-Blockzustandsflags, das anzeigt, ob ein neuer HSDPA-Dienst zu einem gegenwärtigen Zeitpunkt in der HS-DSCH-Funkzelle bereitgestellt werden kann, eines E-DCH-Blockzustandsflags, das anzeigt, ob eine neuer HSUPA-Dienst in der E-DCH/HS-DSCH-Funkzelle bereitgestellt werden kann, und der Hierarchisierungspriorität aller Funkzellen konfiguriert ist.

4. Funkbasisstationssteuergerät nach Anspruch 2 oder 3, wobei
die Funkbasisstationssteuergerät (1, 1a, 1b) dafür konfiguriert ist, einen Einrichtungsgrund (establishment cause) zu halten, der für einen Hochgeschwindigkeitsdienst als internes Datenelement vorgesehen ist, um zu bestimmen, ob das mobile Endgerät das erste mobile Endgerät, das zweite mobile Endgerät oder das dritte mobile Endgerät ist, und
die Zellauswahlverarbeitungseinheit (11) dafür konfiguriert ist, die Zellauswahl auf der Basis der Leistungsfähigkeit des mobilen Endgeräts, einer durch das mobile Endgerät unterstützten Version, einer durch das mobile Endgerät zu startenden Dienstart, eines Einrichtungsgrunds und der Anwesenheit/Abwesenheit von Protokollfehlern durchzuführen, die in einer ersten Verbindungsanfragemitteilung von dem mobilen Endgeräts angezeigt werden.

5. Funkbasisstationssteuergerät nach einem der Ansprüche 1 bis 4, wobei
das Funkbasisstationssteuergerät (1, 1a, 1b) für die Verwaltung von Lastinformationen aller durch das Funkbasisstationssteuergerät (1, 1a, 1b) gesteuerten Funkzellen konfiguriert ist, und
die Zellauswahlverarbeitungseinheit (11) den Lastanstieg, der aus der Hinzunahme eines mobilen Endgeräts resultieren wird, mit einem vorgegebenen Schwellwert vergleicht, um zu ermitteln, ob das mobile Endgerät in einer für das mobile Endgerät ausgewählten Funkzelle untergebracht werden kann, und wenn die Zelllast den Schwellwert übersteigt, eine andere in Frage kommende Funkzelle auswählt.

6. Mobilkommunikationssystem, welches das Funkbasisstationssteuergerät (1, 1a, 1b) nach einem der Ansprüche 1 bis 5 aufweist.

7. Prioritätszellen-Auswahlverfahren zur Verwendung in einem Funkbasisstationssteuergerät, das über eine Funkbasisstation (2, 3) mit einem mobilen Endgerät verbunden werden kann, wobei das Verfahren aufweist:
Steuern einer Vielzahl von Funkzellen unterschiedlicher Typen;
Beurteilen, welcher der verschiedenen Zelltypen eine Funkzelle der Funkbasisstation (2, 3) ist, wobei der Zelltyp, der Funkbasisstation (2, 3) einer der folgenden ist:
(i) ein Zelltyp, der einen Hochgeschwindigkeits-Abwärtspaket-Zugriffsdienst (HSDPA-Dienst) bereitstellen kann;
(ii) ein Zelltyp, der sowohl einen Hochgeschwindigkeits-Abwärtspaket-Zugriffsdienst als auch einen Hochgeschwindigkeits-Aufwärtspaket-Zugriffsdienst (HSUPA-Dienst) bereitstellen kann; oder
(iii) ein Zelltyp, der weder HSDPA noch HSUPA unterstützt; und
Ausführen der Zellauswahlverarbeitung zur Durchführung der Zellauswahl unter der Vielzahl von Funkzellen für das mobile Endgerät auf der Basis des in dem Beurteilungsschritt identifizierten Zelltyps, von Informationen über die Funkzelle und Informationen über das mobile Endgerät.

8. Prioritätszellen-Auswahlverfahren nach Anspruch 7, wobei bei der Zellauswahlverarbeitung das Funkbasisstationssteuergerät (1, 1a, 1b)
eine HS-DSCH-Funkzelle für ein HS-DSCH-fähiges erstes mobiles Endgerät auswählt, für das zum Durchführungszeitpunkt eines Paketdienstes ein HSDPA-Dienst (Hochgeschwindigkeits-Abwärtspaket-Zugriffsdienst) auf einem HS-DSCH (gemeinsamen Hochgeschwindigkeits-Abwärtskanal) bereitgestellt wird,
eine E-DCH/HS-DSCH-Funkzelle für ein E-DCH/HS-DSCH-fähiges zweites mobiles Endgerät auswählt, für das zum Durchführungszeitpunkt des Paketdienstes ein HSDPA-Dienst und ein HSUPA-Dienst (Hochgeschwindigkeits-Aufwärtspaket-Zugriffsdienst) auf einem E-DCH (verbesserten DCH)/HS-DSCH bereitgestellt werden, und
eine den E-DCH/HS-DSCH-Dienst nicht unterstützende Funkzelle für ein E-DCH/HS-DSCH-unfähiges drittes mobiles Endgerät auswählt, für das zum Ausführungszeitpunkt des Paketdienstes sowohl auf der Aufwärtsverbindung als auch auf der Abwärtsverbindung nur Dienste mit niedriger Geschwindigkeit bereitgestellt werden.

9. Prioritätszellen-Auswahlverfahren nach Anspruch 8, wobei während der Zellauswahlverarbeitung das Funkbasisstationssteuergerät die Zellauswahl auf der Basis eines HS-DSCH-Blockzustandsflags, das anzeigt, ob zu einem gegenwärtigen Zeitpunkt ein neuer HSDPA-Dienst in der HS-DSCH-Funkzelle bereitgestellt werden kann, eines E-DCH-Blockzustandsflags, das anzeigt, ob zu einem gegenwärtigen Zeitpunkt ein neuer HSUPA-Dienst in der E-DCH/HS-DSCH-Funkzelle bereitgestellt werden kann, und der Hierarchisierungspriorität aller Funkzellen durchführt.

10. Prioritätszellen-Auswahlverfahren nach Anspruch 8 oder 9, wobei
das Funkbasisstationssteuergerät einen Einrichtungsgrund hält, der für einen Hochgeschwindigkeitsdienst als internes Datenelement vorgesehen ist, um zu bestimmen, ob das mobile Endgerät das erste mobile Endgerät, das zweite mobile Endgerät oder das dritte mobile Endgerät ist, und
das Funkbasisstationssteuergerät bei der Zellauswahlverarbeitung die Zellauswahl auf der Basis der Leistungsfähigkeit des mobilen Endgeräts, einer durch das mobile Endgerät unterstützten Version, einer durch das mobile Endgerät zu startenden Dienstart, eines Einrichtungsgrunds und der Anwesenheit/Abwesenheit von Protokollfehlern durchführt, die in einer ersten Verbindungsanfragemitteilung von dem mobilen Endgerät angezeigt werden.

11. Prioritätszellen-Auswahlverfahren nach einem der Ansprüche 7 bis 10, wobei
das Funkbasisstationssteuergerät (1, 1a, 1b) Lastinformationen aller durch das Funkbasisstationssteuergerät (1, 1a, 1b) gesteuerten Funkzellen verwaltet, und
die Zellauswahlverarbeitung einen Lastanstieg, der aus der Hinzunahme eines mobilen Endgeräts resultiert, mit einen vorgegebenen Schwellwert vergleicht, um zu ermitteln, ob das mobile Endgerät in einer für das mobile Endgerät ausgewählten Funkzelle untergebracht werden kann, und wenn die Zelllast den Schwellwert übersteigt, eine andere in Frage kommende Funkzelle auswählt.

12. Aufzeichnungsmedium, auf dem ein Programm für ein Prioritätszellen-Auswahlverfahren zur Verwendung in einem Funkbasisstationssteuergerät (1, 1a, 1b) aufgezeichnet ist, das über eine Funkbasisstation mit einem mobilen Endgerät verbunden ist, wobei das Programm einen in dem Funkbasisstationssteuergerät (1, 1a, 1b) bereitgestellten Computer veranlasst, das Verfahren nach Anspruch 7 durchzuführen.

## Revendications

1. Station de commande de station de base sans fil, comprenant :
des moyens agencés pour se connecter à un terminal mobile par l'intermédiaire d'une station de base sans fil (2, 3) ;
des moyens agencés pour commander une pluralité de cellules de types différents par l'intermédiaire de ladite station de base sans fil (2, 3) ;
des moyens agencés pour évaluer le type de cellule, parmi lesdits types différents, auquel une cellule de ladite station de base sans fil (2, 3) appartient, dans laquelle ledit type de cellule de ladite station de base sans fil (2, 3) est :
(i) un type de cellule qui est capable de fournir un service d'accès par paquets en liaison descendante haut débit (HSDPA) ;
(ii) un type de cellule qui est capable de fournir un service d'accès par paquets en liaison descendante haut débit ainsi qu'un service d'accès par paquets en liaison montante haut débit (HSUPA) ; ou
(iii) un type de cellule qui ne supporte pas HSDPA ou HSUPA ; et
une unité de traitement de sélection de cellule (11) agencée pour réaliser une sélection de cellule parmi ladite pluralité de cellules pour ledit terminal mobile en fonction :
du type de cellule identifié par ledit moyen d'évaluation,
d'informations sur ladite cellule, et
d'informations sur ledit terminal mobile.

2. Station de commande de station de base sans fil selon la revendication 1, dans laquelle ladite unité de traitement de sélection de cellule (11) est configurée pour :
sélectionner une cellule HS-DSCH pour un premier terminal mobile capable de HS-DSCH auquel un service HSDPA (« High Speed Downlink Packet Access ») en liaison descendante haut débit est fourni sur un HS-DSCH (« High Speed Downlink Shared Channel ») à l'instant d'une implémentation de service par paquets,
sélectionner une cellule E-DCH/HS-DSCH pour un deuxième terminal mobile capable de E-DCH/HS-DSCH auquel ledit service HSDPA et un service HSUPA (« High Speed Uplink Packet Access ») en liaison montante haut débit sont fournis sur un E-DCH (« Enhanced DCH »)/HS-DSCH à l'instant de ladite implémentation de service par paquets, et
sélectionner une cellule ne supportant pas de service E-DCH/HS-DSCH pour un troisième terminal mobile incapable de service E-DCH/HS-DSCH auquel seulement des services bas débit sont fournis sur ladite liaison montante ainsi que ladite liaison descendante à l'instant de ladite implémentation de service par paquets.

3. Station de commande de station de base sans fil selon la revendication 2, dans laquelle ladite unité de traitement de sélection de cellule (11) est configurée pour réaliser ladite sélection de cellule en fonction d'un drapeau d'état de blocage HS-DSCH qui indique s'il est possible de fournir un nouveau service HSDPA à un instant présent dans ladite cellule HS-DSCH, d'un drapeau d'état de blocage E-DCH qui indique s'il est possible de fournir un nouveau service HSUPA dans ladite cellule E-DCH/HS-DSCH, et d'une priorité de hiérarchisation de toutes cellules.

4. Station de commande de station de base sans fil selon la revendication 2 ou 3, dans laquelle
ladite station de commande de station de base sans fil (1, 1a, 1b) est configurée pour maintenir une cause d'établissement qui est prévue pour un service haut débit sous forme de données internes afin de déterminer si ledit terminal mobile est ledit premier terminal mobile, ledit deuxième terminal mobile, ou ledit troisième terminal mobile, et
ladite unité de traitement de sélection de cellule (11) est configurée pour réaliser ladite sélection de cellule en fonction de la capacité dudit terminal mobile, d'une version supportée par ledit terminal mobile, d'un type de service destiné à être commencé par ledit terminal mobile, d'une cause d'établissement, et d'une présence/absence d'erreurs de protocole qui sont indiquées dans un premier message de demande de radio-connexion à partir dudit terminal mobile.

5. Station de commande de station de base sans fil selon une quelconque des revendications 1 à 4, dans laquelle
la station de commande de station de base sans fil (1, 1a, 1b) est configurée pour gérer des informations de charge de toutes les cellules commandées par la station de commande de station de base sans fil (1, 1a, 1b), et
ladite unité de traitement de sélection de cellule (11) compare une augmentation de charge qui résultera de l'ajout d'un terminal mobile à une valeur seuil prédéterminée afin de déterminer si le terminal mobile peut être installé dans une cellule sélectionnée pour le terminal mobile, et, si la charge de cellule dépasse la valeur de seuil, sélectionne une autre cellule candidate.

6. Système de communication mobile comprenant la station de commande de station de base sans fil (1, 1a, 1b) selon une quelconque des revendications 1 à 5.

7. Procédé de sélection de cellule prioritaire destiné à être utilisé dans une station de commande de station de base sans fil qui est connectable à un terminal mobile par l'intermédiaire d'une station de base sans fil (2, 3), le procédé comprenant :
la commande d'une pluralité de cellules de types différents ;
l'évaluation du type, parmi lesdits types différents de cellule, auquel une cellule de ladite station de base sans fil (2, 3) appartient, dans lequel ledit type de cellule de ladite station de base sans fil (2, 3) est :
(i) un type de cellule qui est capable de fournir un service d'accès par paquets en liaison descendante haut débit (HSDPA) ;
(ii) un type de cellule qui est capable de fournir un service d'accès par paquets en liaison descendante haut débit ainsi qu'un service d'accès par paquets en liaison montante haut débit (HSUPA) ; ou
(iii) un type de cellule qui ne supporte pas HSDPA ou HSUPA ; et
l'exécution d'un traitement de sélection de cellule pour réaliser une sélection de cellule parmi ladite pluralité de cellules pour ledit terminal mobile en fonction dudit type de cellule identifié dans ladite étape d'évaluation, d'informations sur ladite cellule, et d'informations sur ledit terminal mobile.

8. Procédé de sélection de cellule prioritaire selon la revendication 7, dans lequel
dans ledit traitement de sélection de cellule, ladite station de commande de station de base sans fil (1, 1a, 1b)
sélectionne une cellule HS-DSCH pour un premier terminal mobile capable de HS-DSCH auquel un service HSDPA (« High Speed Downlink Packet Access ») en liaison descendante haut débit est fourni sur un HS-DSCH (« High Speed Downlink Shared Channel ») à l'instant d'une implémentation de service par paquets,
sélectionne une cellule E-DCH/HS-DSCH pour un deuxième terminal mobile capable de E-DCH/HS-DSCH auquel ledit service HSDPA et un service HSUPA (« High Speed Uplink Packet Access ») en liaison montante haut débit sont fournis sur un E-DCH (« Enhanced DCH »)/HS-DSCH à l'instant de ladite implémentation de service par paquets, et
sélectionne une cellule ne supportant pas de service E-DCH/HS-DSCH pour un troisième terminal mobile incapable de service E-DCH/HS-DSCH auquel seulement des services bas débit sont fournis sur ladite liaison montante ainsi que sur ladite liaison descendante à l'instant de ladite implémentation de service par paquets.

9. Procédé de sélection de cellule prioritaire selon la revendication 8, dans lequel, dans ledit traitement de sélection de cellule, ladite station de commande de station de base sans fil réalise la sélection de cellule en fonction d'un drapeau d'état de blocage HS-DSCH qui indique s'il est possible de fournir un nouveau service HSDPA à un instant présent dans ladite cellule HS-DSCH, d'un drapeau d'état de blocage E-DCH qui indique s'il est possible de fournir un nouveau service HSUPA dans ladite cellule E-DCH/HS-DSCH, et d'une priorité de hiérarchisation de toutes cellules.

10. Procédé de sélection de cellule prioritaire selon la revendication 8 ou 9, dans lequel
ladite station de commande de station de base sans fil maintient une cause d'établissement qui est prévue pour un service haut débit sous forme de données internes afin de déterminer si ledit terminal mobile est ledit premier terminal mobile, ledit deuxième terminal mobile, ou ledit troisième terminal mobile, et
ladite station de commande de station de base sans fil réalise, dans ledit traitement de sélection de cellule, ladite sélection de cellule en fonction de la capacité dudit terminal mobile, d'une version supportée par ledit terminal mobile, d'un type de service destiné à être commencé par ledit terminal mobile, d'une cause d'établissement, et d'une présence/absence d'erreurs de protocole qui sont indiquées dans un premier message de demande de radio-connexion à partir dudit terminal mobile.

11. Procédé de sélection de cellule prioritaire selon une quelconque des revendications 7 à 10, dans lequel
ladite station de commande de station de base sans fil (1, 1a, 1b) gère des informations de charge de toutes les cellules commandées par ladite station de commande de station de base sans fil (1, 1a, 1b), et
ledit traitement de sélection de cellule compare une augmentation de charge qui résultera de l'ajout d'un terminal mobile à une valeur seuil prédéterminée afin de déterminer si le terminal mobile peut être installé dans une cellule sélectionnée pour le terminal mobile, et, si la charge de cellule dépasse la valeur de seuil, sélectionne une autre cellule candidate.

12. Support d'enregistrement possédant, enregistré sur celui-ci, un programme pour un procédé de sélection de cellule prioritaire destiné à être utilisé dans une station de commande de station de base sans fil (1, 1a, 1b) qui est connectée à un terminal mobile par l'intermédiaire d'une station de base sans fil, ledit programme faisant en sorte qu'un ordinateur fourni dans ladite station de commande de station de base sans fil (1, 1a, 1b) réalise le procédé selon la revendication 7.
